# EUROPEAN PATENT SPECIFICATION

(11) **EP 3 027 406 B1**
(45) Date of publication and mention of the grant of the patent: **16.08.2023**
(21) Application number: 14730054.5
(22) Date of filing: 22.05.2014
(51) Int. Cl.: B32B 5/12, B32B 5/26

(54) **COMPOSITE BI-ANGLE AND THIN-PLY LAMINATE TAPES AND METHODS FOR MANUFACTURING AND USING THE SAME**
ZUSAMMENGESETZTE ZWEIWINKLIGE UND DREILAGIGE LAMINATBÄNDER SOWIE VERFAHREN ZUR HERSTELLUNG UND VERWENDUNG DAVON
BANDES STRATIFIÉES BI-ANGULAIRES ET À PLIS FINS COMPOSITES ET LEURS PROCÉDÉS DE FABRICATION ET D'UTILISATION

(30) Priority: 29.07.2013 US 201313953523
(43) Date of publication of application: 08.06.2016
(73) Proprietor: Compagnie Chomarat, 75007 Paris (FR); The Board of Trustees of the Leland Stanford Junior University, Stanford, CA 94305-2038 (US)
(72) Inventor: TSAI, Stephen W., Palo Alto, California 94301 (US); COGNET, Michel, F-69006 Lyon (FR); SANIAL, Philippe, F-07240 Vernoux en Vivarais (FR)
(74) Representative: Cabinet Laurent & Charras
(86) International application number: PCT/US2014/039127
(87) International publication number: WO 2015/017006

(56) References cited:
- WO-A1-2012/096696
- WO-A2-2007/067949
- US-A- 4 214 932
- US-A1- 2004 219 851

## Description

### BACKGROUND

### Field of Invention

The present invention relates generally to composite laminate tapes, in particular those containing shallow bi-angle and thin-ply orientations to achieve desirable improved physical properties, together with methods for manufacturing and using such tapes.

### Description of Related Art

Conventional composite laminate materials are generally designed to emulate the strength characteristics of conventional metal-based structural materials, and as such have been typically constrained to designs having layers of plies that contain at least four distinct ply angles (e.g., 0°, ±45°, and 90°), with mid-plane symmetry, balanced off-axis angle plies (e.g. at the ±45° orientation), and thick plies for reducing laminate structure layup time. From a practical perspective, constructions made with such limitations resulted in precise and reliable material characteristics (e.g., strength and stiffness, and the like) for any composite laminate structures formed from such laminate materials, as have been historically demanded by many key players in industry fields utilizing such composite laminate structures. Significant changes from these and other conventional laminate materials and/or structures, which are oftentimes referred to in the art as "black aluminum" laminates due to their metal-emulating characteristics and black color arising from the commonly-used carbon fibers, have been historically discouraged.

As commonly known and used in the art, symmetrical laminates involve a reflective or mirror-image equivalence of ply orientation about their mid-plane, while balanced laminates involve an equal number of positively (+) and negatively (-) oriented plies across their entirety. These constraints, in particular, have traditionally remained unchallenged due to concerns that, absence such symmetry and balance, conventionally formed structures will undesirably warp upon post-cure cool down and/or be unduly susceptible to bending or twisting upon imposition of a load force. Formation of laminate structures has thus generally involved time- and labor-intensive stacking procedures of individual plies of fibers to ensure that both balance and symmetry are maintained. Unfortunately, the resulting complex stacking procedures are prone to error, resulting in excessive waste and cost, particularly where tapering of the thickness of a composite laminate structure is desirable. When tapering, plies are "dropped" when approaching the end of the taper to gradually reduce the thickness of the composite part. However, in order to continue to meet the symmetry and balance constraints, it is necessary to provide coordinated and paired ply drops to maintain the desired material characteristics of the laminate structure. Specifically, to maintain symmetry, each ply and its corresponding ply opposite the mid-plane must be dropped together. In contrast, if each ply within a pair with a specific ply angle is dropped, one at a time, the laminate composition in terms of ply angle fractions will change as such individual ply drops proceed. Still further, the material properties of laminate panel will change because plies of different ply angles will be dropped, one at a time.

Conventional wisdom in the art has further generally required at least four ply layers to match the required four ply angles of 0, ±45, 90 for a composite laminate structure so as to follow industry-acceptable practice of strength, stiffness, and other material characteristics. Due to their inherent strength unidirectional (e.g., 0°) plies have been incorporated extensively within such laminate structures, with such being sequentially stacked via a layup process so as to obtain a four ply configuration (e.g., [0°, ±45°, 90°]). Notably, such lay-up procedures are likewise time-and labor-intensive, requiring sequential rotation and orientation of each respective layer therein prior to consolidation. As a non-limiting example, for the conventional four ply unidirectional composite laminate structure, a four-axis layup procedure would be necessary, at a minimum. Certain three-ply orientations are also commonly known and used in the art, such as [0°, ±45°] configurations, which would inherently involve a three-axis layup procedure. Throughout, as previously mentioned, balance and symmetry would need to be maintained, both during the layup procedure and during any subsequent tapering (e.g., via ply drop) procedures. In view of the above constraints, conventional laminate materials have historically created difficulty when trying to further minimize laminate thickness, which is of particular concern in those industries such as the aircraft industry, which continually seeks ever-increasingly lightweight structures. To create these thinner laminate materials, the use of thinner plies is discussed in least U.S. Patent Application Publication No. 2012/0177872 . However industry standards in the art have generally advised against relatively thin ply configurations, not only because of the inherent difficulty in even forming such, but also due to a belief that thinner plies would adversely impact material characteristics such as strength, stiffness, and the like. Still further, key players in industries using composite laminate materials have historically perceived thin ply configurations as increasing costs, due at least in part to the notion that additional layups would be necessary to obtain a laminate structure with material characteristics comparable to the conventional four-ply balanced and symmetrical compositions.

The use of composite tapes is known as an alternative, or addition to, the manually laid-up layers discussed above. In particular, composite tapes can be applied with automatic tape laying (ATL) equipment that provides for a tape to be unwound from a reel and placed onto a part more rapidly, and precisely, and with sufficient pressure for compaction than the manual layup of sheets of plies. The ATL equipment can be especially useful for fuselage, wings, rotors or other hollow structures where the tapes can be continuously wound or laid, but ATL processes still have valuable uses with flat or curved parts. Most tapes known in the art for ATL equipment are made from unidirectional fibers (also known as "unitape") and multiple passes along multiple axes are required to provide the required balance and symmetry.

In addition, applications involving the use of composite laminate tapes for winding or laying up complex three-dimensional surfaces have historically posed particular difficulties. Buckling and wrinkling, which introduce imperfections in the material characteristics of such tapes, are commonplace, at least in part due to the inflexibility and the overall thickness of the laminate tape itself. In recent years fiber placement machines have emerged to reduce these manufacturing imperfections but the extra cost of the machine and its slow layup rate have prevented wide usage. Workarounds have either provided for still thicker windings in such instances so as to compensate for any lost strength or stiffness or avoided the provision of complex curvatures in any underlying wrapped structures. Such either adds further weight to the structures, perhaps even unnecessarily due to the introduced uncertainties from buckling and/or wrinkling, or requires multiple seams between adjacent portions of the wrapped structures, which themselves may similarly impact strength, stiffness, and still other parameters.

Accordingly, in view of the above, a need exists to provide composite tapes, which dispense with the above-described constraints and thus minimize and overcome the various inefficiencies and limitations thereof while also providing physical characteristics comparable to those of conventional laminate configurations. A need further exists to provide composite laminate tapes that provide an improved drapability for use on complex three-dimensional surfaces, again while also providing physical characteristics comparable to those of conventional laminate configurations, as generally expected by participants in the composite laminate structure industry. The layup rate is tied directly to the productivity of composites processing cost and may be enhanced not only in the quality and defect tolerance of manufacturing but also many fold increase in the productivity of the process leading to a significant reduction in processing cost.

### BRIEF SUMMARY

Briefly, various embodiments of the present invention address the above needs and achieve other advantages by providing a composite laminate tape comprising innovative bi- angle and thin-ply orientations, at least some of which may be further pliable relative to complex three-dimensional surfaces, so as to achieve desirable improved physical properties, facilitate more efficient and accurate manufacturing processes, and provide various products that are less costly to use and even provide improved benefits relative to conventional configurations, as described herein. Indeed, instead of using unitape for automated tape laying, filament and tape winding, and fiber placement machine in a similar manner, various embodiments described herein will replace unitape with bi-angle tape made of thin plies, and variable angles, stitched or otherwise bonded together by a unique NCF process, which altogether results in composite laminate structures having the non-limiting advantages of higher performance, higher quality, less weight, and reduced cost - relative to conventional unitape configurations.

As such, various embodiments as described herein provide a bi-angle pliable tape for use in forming a composite laminate structure. The bi-angle pliable tape comprises: a longitudinal axis extending in a unidirectional machine direction and corresponding to a primary axis of the bi-angle pliable tape; a first ply comprising fibers extending in a first orientation, the first orientation being offset relative to the longitudinal axis at a first angle of less than 30°; and a second ply comprising fibers extending in a second orientation, the second orientation being opposite to the first orientation relative to the unidirectional machine direction and the primary axis of the bi-angle pliable tape. The first ply and the second ply are further secured substantially adjacently relative to one another by one or more yarns so as to provide a non-crimped configuration such that the bi-angle tape defines a pliable structure, the one or more yarns being oriented substantially in a transverse direction relative to the primary axis of the bi-angle pliable tape, the pliable structure being configured to permit relative movement of the first and second plies relative to one another upon subjection to a load or force capable of introducing scissoring into the configuration.

Still further, various embodiments provide a quasi-isotropic composite laminate structure. The structure comprises: at least three bi-angle tapes, each tape comprising: a first ply layer comprising fibers extending in a first orientation; and a second ply layer comprising fibers extending in a second orientation, the second orientation being offset relative to the first orientation. Each of the at least three tapes of the composite laminate structure are further rotationally oriented relative to one another such that corresponding ply layers are substantially uniformly distributed across a 360° angle at an incremental angle of less than or equal to 30°.

A method of forming a quasi-isotropic composite laminate structure according to various embodiments is also provided. The method comprises the steps of: forming at least three tapes, each tape comprising a first ply layer comprising fibers oriented in a first direction and a second ply layer comprising fibers oriented in a second direction, the second direction being offset relative to the first direction by a ply angle of less than or equal to 30°; positioning a first of the at least three tapes such that fibers of the second ply layer of the first tape extend in a first orientation; stacking a second of the at least three tapes relative to the first of the at least three tapes such that fibers of the first ply layer of the second of the at least three tapes extend in a second orientation, the second orientation being offset relative to the first orientation by an incremental angle of less than or equal to 45°; and stacking a third of the at least three tapes relative to the second of the at least three tapes such that the fibers of the first ply layer of the third of the at least three tapes extend in a third orientation, the third orientation being offset relative to the second orientation by the incremental angle, wherein the fibers of the second ply layer of the third of the at least three tapes extend in a fourth orientation, the fourth orientation being offset relative to fibers of the first ply layer of the first tape by the incremental angle, such that the at least three tapes are substantially uniformly distributed across a 360° angle so as to form the composite laminate structure. A method of forming a composite laminate integrated bulkhead structure is also provided according to various embodiments. The method comprises the steps of: forming at least three tapes, each tape comprising a first ply layer comprising fibers oriented in a first direction and a second ply layer comprising fibers oriented in a second direction, the second direction being offset relative to the first direction by an angle of less than or equal to 30°; positioning a first of the at least three tapes such that fibers of the second ply layer of the first tape extend in a first orientation, the first of the at least three tapes defining a first portion of a surface of the bulkhead structure; stacking a second of the at least three tapes relative to the first of the at least three tapes such that fibers of the first ply layer of the second of the at least three tapes extend in a second orientation, the second orientation being offset relative to the first orientation by an incremental angle of less than or equal to 45°, the second of the at least three tapes defining a second portion of the surface of the bulkhead structure, the second portion at least in part overlapping the first portion; and stacking a third of the at least three tapes relative to the second of the at least three tapes such that the fibers of the first ply layer of the third of the at least three tapes extend in a third orientation, the third orientation being offset relative to the second orientation by the incremental angle, the third of the at least three tapes defining a third portion of the surface of the bulkhead structure, the third portion at least in part overlapping the first and second portions, wherein the fibers of the second ply layer of the third of the at least three tapes extend in a fourth orientation, the fourth orientation being offset relative to fibers of the first ply layer of the first tape by the incremental angle, such that the at least three tapes are substantially uniformly distributed across a 360° angle such so as to form the composite laminate integrated bulkhead structure.

Various embodiments still further provide a composite laminate integrated bulkhead formed from an integrated piece of material and by the quasi-isotropic composite laminate structure described above. Still other embodiments provide a composite laminate integrated bulkhead formed from an integrated piece of material and by a plurality of the bi-angle pliable tapes described above.

Various embodiments also provide a containment ring formed from the quasi- isotropic composite laminate structure described above. Still other embodiments provide a containment ring formed from a plurality of the bi-angle pliable tapes likewise described above. Various embodiments provide further a penetration resistant article formed from the quasi-isotropic composite laminate structure described above. Other embodiments provide a penetration resistant article formed from a plurality of the bi-angle pliable tapes as likewise described above.

### BRIEF DESCRIPTION OF THE SEVERAL VIEWS OF THE DRAWING(S)

Having thus described various embodiments of the invention in general terms, reference will now be made to the accompanying drawings, which are not necessarily drawn to scale, and wherein:
Figure 1 illustrates a symmetric laminate structure 1 adjacent an asymmetric laminate structure 5 for purposes of illustrating various characteristics of the same according to various embodiments;
Figure 2 illustrates an exemplary layup process for formation of a laminate structure 10 from a plurality of sub-laminate tape modules 15 according to various embodiments;
Figure 3 illustrates further exemplary layup processes for formation of a laminate structure 110 according to various embodiments;
Figure 4A illustrates an exemplary layup process for formation of a [π/6] quasi- isotropic laminate structure 210 according to various embodiments;
Figure 4B illustrates an exemplary layup process for formation of a [π/8] quasi- isotropic laminate structure 220 according to various embodiments;
Figures 5 illustrates various quasi-isotropic and orthotropic strength characteristics of an additional exemplary [π/6] laminate structure 230 according to various embodiments;
Figure 6 illustrates combined tensile and shear strength of various embodiments of the laminate structures described herein at various ply angles such as [0, 20], [0, 25], and [0, 90] according to various embodiments;
Figure 7 illustrates exemplary uniaxial tensile and compression strength data of various embodiments of the laminate structures described herein at ply angles of 0° and 22.5°, as compared with such data for conventional laminate structures such as T800 composite laminates;
Figure 8 illustrates quasi-isotropic stiffness, and non-isotropic strength characteristics of ply angles ranging from 0° to 90°, as achievable via various embodiments by stacking of bi-angle, thin ply laminate structures 10, 110, 210, 220, and 230 according to various embodiments;
Figure 9 illustrates compressive strength after impact characteristics of various bi- angle, thin ply laminate structures, upon stacking thereof according to various embodiments;
Figure 10 illustrates an exemplary tapering configuration of an exemplary bi-angle, thin ply laminate 6" tape structure incorporating two adjacently positioned 3" tapes, laid up with offset seams according to various embodiments;
Figure 11 illustrates an exemplary layup process for formation of a pliable laminate structure 410 from a plurality of ply layers according to various embodiments;
Figure 12 illustrates an exemplary layup process for formation of a [π/4] quasi- isotropic pliable laminate structure 420 according to various embodiments;
Figure 13 illustrates various strength and stiffness characteristics for the pliable tape for laminate structures 410, 420 according to various embodiments;
Figure 14 illustrates scissoring characteristics of a pliable pre-preg leading to 410, 420 of Figures 11-12 according to various embodiments;
Figure 15 illustrates an exemplary composite airplane application 500 for the various axes of layup for composite structures described herein, and containment rings for jet engines according to various embodiments;
Figure 16 illustrates an exemplary airplane fuselage application 600 and an exemplary tape winding process 610 for the various laminate structures described herein according to various embodiments;
Figure 17 illustrates an exemplary cylindrical vessel and bulkhead surface application 700 for the various laminate structures described herein according to various embodiments;
Figure 18 illustrates an exemplary airplane wing application 800 for the various laminate structures described herein according to various embodiments;
Figure 19 illustrates an exemplary conventional fuselage skin and bulkhead surface application 900 as compared to the illustration of Figure 17; and
Figures 20A and 20B illustrate an exemplary NCF configuration, showing in particular exemplary stitching configurations as such may be formed according to various embodiments.

### DETAILED DESCRIPTION OF VARIOUS EMBODIMENTS

Various embodiments of the present invention now will be described more fully hereinafter with reference to the accompanying drawings, in which some, but not all embodiments of the invention are shown. Indeed, embodiments of the invention may be embodied in many different forms and should not be construed as limited to the embodiments set forth herein. Rather, these embodiments are provided so that this disclosure will satisfy applicable legal requirements. The term "or" is used herein in both the alternative and conjunctive sense, unless otherwise indicated. Like numbers refer to like elements throughout.

### General Foundation and Overview

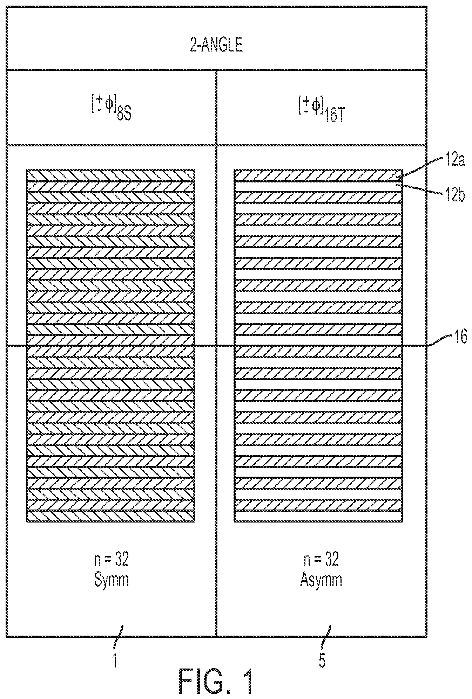

In general, various embodiments of the present invention dispense with one or more of the various traditionally accepted constraints that govern laminate structure and the methods of making the same. Such constraints, as will be shown, often compromise the flexibility and benefits of structures formed therefrom Typical constraints include, but are not limited to: symmetry, balance, ply number, relatively large angles between plies, and thick plies, as will be further described below. Additional constraints exist, including those further described in U.S. Patent Application Publication No. 2012/0177872. Generally speaking, with reference to Figure 1, "symmetry" requires that the layered composition of a laminated structure appear exactly the same when flipped or turned upon a mid-plane axis of the laminated structure. For example, the illustrated laminate structure 1 of Figure 1 is symmetrical about mid-plane 16. The illustrated laminate structure 5 of Figure 1, however, is asymmetrical about the mid-plane 16. Amongst other benefits, such permits sequential uninterrupted laying or winding of respective layers 12a, 12b thereof, whereas those configurations that require symmetry inherently incorporate a duplicate set of the same layer immediately adjacent the mid- plane 16, as further illustrated in Figure 1, and so the laying of respective layers must be interrupted at the mid-plane.

The asymmetrical configuration that lends to sequential laying of respective layers 12a, 12b of laminate structure 5 not only facilitates a more simplistic and less time- intensive layup process due to the elimination of any flipping or alteration of the sequence about a mid-plane 16, but also provides additional benefits, including the non-limiting example of improved homogenization, with assured shape optimization through tapering, and single and simple ply drop tapering capabilities. "Homogenization" occurs when a sufficient number of ply layers have been stacked relative to one another such that the material characteristics of the formed laminate structure 5 may be evaluated and even predicted on a structural basis, with equal confidence as the conventional ply-by-ply basis. With asymmetrical configurations such as that illustrated with the laminate structure 5 of Figure 1, homogenization is achieved with as few as 32 total plies or 16 sub-laminate modules, each containing two distinct ply layers, as will be described elsewhere herein. Further details surrounding homogenization are described elsewhere herein and also within U.S. Patent Application Publication No. 2012/0177872.

The additional benefit of single unit (whether on an individual ply basis or on an individual sub-laminate module basis, as such is described elsewhere herein) drop tapering capabilities, as provided by asymmetrical configurations such as that of laminate structure 5 in Figure 1, is interrelated with not only homogenization, but also the sequential, continuous stacking characteristics of such structures, as described above. Due to homogenization, single unit drop tapering may occur without a need for recalculation and/or further predicting material characteristics following the unit drop. In other words, a laminated panel will maintain the same stiffness and strength as tapering proceeds. This is due, at least in part, to the sequential stacking, whereby if a unit is dropped from either side of the laminate structure 5 (e.g., a layer 12a from the top and a layer 12b from the bottom; or a sub-laminate module of 12a+12b from either side, as will be described elsewhere herein) the inherent material characteristics of the laminate structure 5 will not only not be altered as unit layers are dropped, but the structure will not lose homogeneity. This is evident from examining the sequential stacking structure of laminate structure 5 in Figure 1. Still further interrelated with the characteristics of laminate structure 5, it should be understood that the homogeneity and asymmetric nature thereof also results in less cracking and delamination, as such is all further described within U.S. Patent Application Publication No. 2012/0177872.

Still further, ideally, tapering of composite panels must be determined by optimization. In practice such operation is possible only for homogenized laminates. Conventional un-homogenized laminates, with stacking sequence dependency, are difficult, if not impossible to taper accurately, as thousands of stacking permutations exist within such structures. Thus homogenization makes optimization possible, as such is provided via various embodiments described herein. Resulting benefits include that weight of composite structures can thus be reduced, and still further minimum weight becomes feasible and obtainable. Reduced weight of composite structures, in turn, improves performance and reduces cost, not to mention other optimization objections that may be desirable according to various embodiments. Additional details in this regard are described within U.S. Patent Application Publication 2012/0177872.

With continued reference to Figure 1, in various embodiments of the laminate structure 5, such may comprise a plurality of carbon fiber plies oriented at various angles (such as 0°, ±20°, ±22.5°, ±25°, ±30°, ±45°, ±60°, and the like), as may be desirable for particular applications and/or material characteristics, all as will be described further below. In certain embodiments, however, the ply layers (e.g., 12a and 12b) may be formed entirely or partially from any of a variety of materials, such as the non-limiting examples of fiberglass or electrical conductors such as copper). In still other embodiments, a variety of materials may be incorporated via multiple layers of the laminate structure 5 so as to form a hybrid configuration. In still other embodiments, a triangle configuration may even be provided, while simultaneously maintaining the total tape thickness to two layers. Notably, the thinner the bi- or tri-angle tape is, the easier the ply drop, and the lower the stress concentration at the discontinuity seams of the off-axis layers.

It should be understood generally that as layup angles become shallower, certain consequences thereof are (1) greater scrap relative to layups in the machine direction or at more conventional 45° layup angles; and (2) a larger area for deceleration of the tape laying process. As a non-limiting example, a single layup at a 22.5° shallow angle results in 1.3 times the scrap than a single layup at a more conventional 45° angle. That being said, because the shallower angle layups enable coverage of a greater area on particularly elongated structures (e.g., aircraft wings), overall scrap, resulting from multiple layups, may be less with shallower layup angles, relative to at least more conventional 45° layup angles.

With respect to the larger area for deceleration, as the layup angle becomes shallower, it is necessary to reduce the speed of the ATL machine over a greater distance than necessary with, for example, more conventional layups at a 45° angle. The greater distance is defined by at least one side opposite the hypotenuse of a triangle formed by the layup angle, from which it should be understood that as the layup angle decreases, the length of such side increases. As a non-limiting example, the area required for deceleration prior to changing layup direction is increased by 241% for a 22.5° layup angle, as compared to a 45° layup angle. That being said, similarly to the generation of scrap, because shallower layup angles result in fewer stoppages overall during the course of formation of surfaces (see above), a net decrease in the time necessary for formation of such surfaces may be realized via a shallower layup angle.

According to various embodiments, the laminate structure 5 (and other structures described elsewhere herein) may be construed primarily from a non-crimp fabric (NCF), which is generally known and understood in the art to provide a feasible balance between cost, handling, and performance. NCF is a class of composite materials, each secured relative to one another via a stitching process, a bonding process, a combination thereof, or otherwise. As a result, NCF construction substantially eliminates the crimp inherent in woven carbon (and other-type) fabric as the warp and weft yarns cross each other. Such crimps, if not eliminated, can adversely impact mechanical strength and stiffness characteristics and create inefficiencies of scale due to misalignment during assembly and the like.

Where NCF configurations incorporate stitching, the stitching may be formed from a variety of types of yarns, such as the non-limiting examples of a 33dtex PES yarn with an E5 stitching gauge and a chain point of 3.4mm. In other embodiments, any of a variety of polyamide or polyimide high temperature-based yarns may be used, and in still other embodiments certain plies may be joined to one another via bonding techniques, all of which as is described in further detail within U.S. Patent Application Publication No. 2012/0177872.

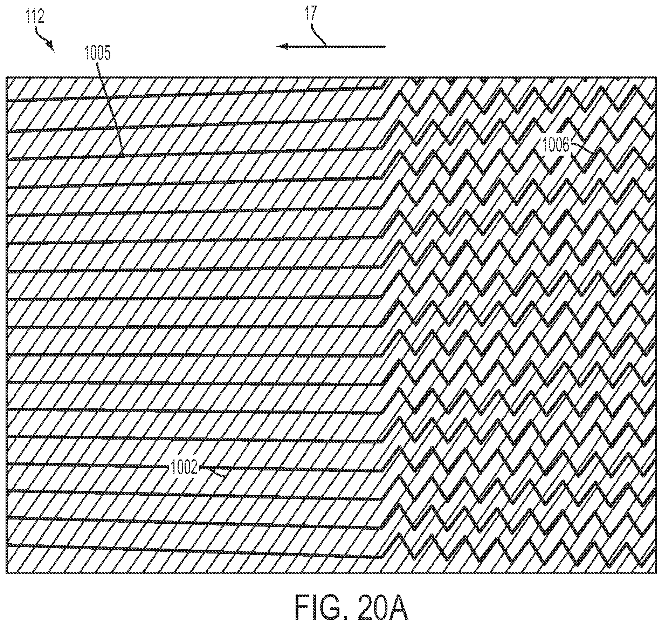

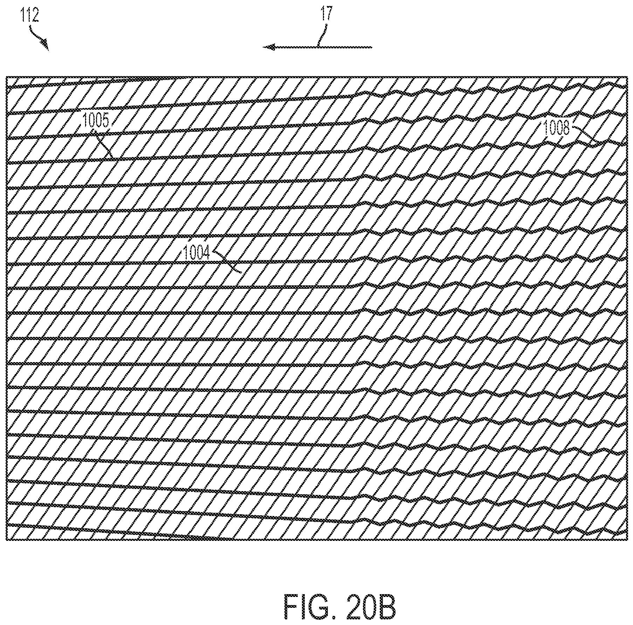

With reference momentarily to Figures 20A-B, it may be seen that the stitching may comprise multiple rows of stitching or threads of yarn extending across a tape or laminate structure, generally along the machine direction 17, although it should be understood that in additional embodiments the stitching may be otherwise oriented, for example in a transverse direction relative to the machine direction. Generally speaking Figure 20A illustrates a first (e.g., front or top) surface 1002 of a sub-laminate structure 112, whereas Figures 20B illustrates a second and opposing (e.g., back or lower) surface 1004 of the structure. As may be seen from Figure 20A, the stitching may be configured in certain embodiments such that it extends in substantially straight lines 1005. In other embodiments, the stitching may be configured in a zig-zag orientation 1006 (see also 1008 of Figure 20B). The relationship between 1006 and 1008 should be understood as the latter (1008) corresponding to stitching lines extending between successive peaks and troughs of zig-zag 1006, as appearing when viewing the sub-laminate structure or tape from opposing sides.

Still further, it should be understood that a zig-zag orientation such as 1006/1008, as illustrated in Figures 20A-B may be incorporated into not only [0/20] and [0/30] and the like configurations (as described elsewhere herein), but also into [±22.5] configurations. In the latter "pliable" configurations, the zig-zag stitching configuration at least in part contributes to the flexibility of the tapes formed therefrom, further enabling the beneficial "scissoring" feature and its corresponding material characteristics, all as described elsewhere herein.

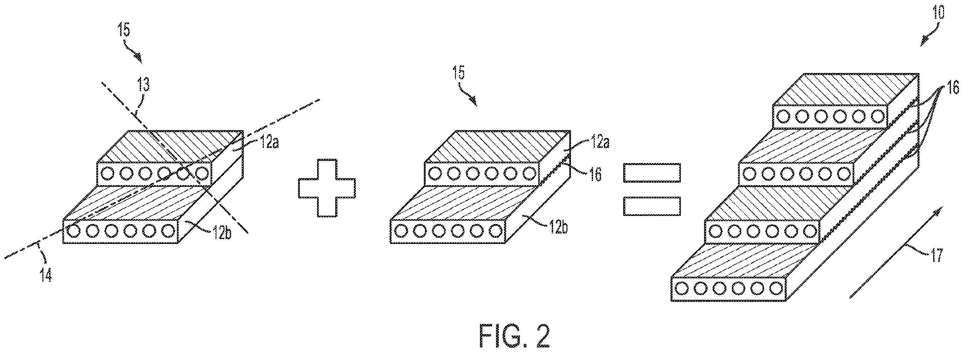

With reference now to Figure 2, illustrated therein are a plurality of sub-laminate modules 15, which may form "building blocks" of sorts for various laminate structures 5, 10 as described elsewhere herein. Each of the sub-laminate modules 15, as depicted in at least Figure 2, may generally comprise at least one first ply layer 12a and one second ply layer 12b, each generally having a different orientation, as will be described elsewhere herein. As the "building blocks," it should be understood that the sub-laminate modules 15 according to various embodiments may be pre-assembled, permitting them to be stacked (and/or stitched) directly atop one another via a "one-axis" or "two-axis" layup process that substantially reduce the time and cost associated with manufacturing the traditional and conventional laminate structure configurations, as previously described herein. It should also be understood that, when referenced throughout herein, the term "module" may refer to a tape structure having more than one ply of fibers, as also described elsewhere herein; in other words, such should not be construed narrowly in the context of sheet-like formed materials and/or structures.

The layup process may be oriented generally relative to a lay-up or machine direction 17, which correlates to a 0° configuration, as such is commonly known and referenced by those of ordinary skill in the art. This 0° configuration represents a reference axis, about which various orientations at off-angle (i.e., not 0°) layup configurations will be arranged for purposes of defining the same. As a result, where reference is made herein to various off-angle layup configurations herein, such should be understood relative to the 0° reference axis as oriented in the machine run direction 17. Similarly, where further certain tape configurations (e.g., [0/30], [±22.5], etc.) are referenced, the ply layer of such tape configurations in which fibers extend in the 0° direction should be understood to correspond further with the 0° layup reference axis.

With reference to Figure 2, it may thus be understood that according to various embodiments, the sub-laminate modules 15 may dispense in certain embodiments with any 0° oriented layer, having instead two distinct off-axis layers, aligned for example along axes 13, 14. Discrete ply layers within the sub-laminate modules 15 and further the sub-laminate modules themselves may be thus rotated relative to one another, as will be described elsewhere herein - whether via an alternating or helical pattern for two tape laying axes, or a spiral or non- spiral for three tape laying axes, such that a plurality of various oriented layers are provided. Each discrete ply layer and/or the sub-laminate modules 15 themselves may be substantially secured and retained relative to one another by transverse stitching 16, so as to provide a non-crimped configuration, as also described elsewhere herein. It should be particularly understood that in certain pliable embodiments, as detailed below, the transverse stitching 16 may be simultaneously sufficiently tight so as to retain and secure the respective layers for purposes of handling during the layup process, but also sufficiently loose so as to permit relative movement there-between upon subjection to a load or force capable of introducing "scissoring" into the configuration. Such is particularly pertinent to the various tape formed embodiments, as will be described in further detail below. The stitching or bonding of NCF will resist fiber movement during RTM or curing of prepreg that conventional unitape panels do not have. Thus the quality of a cured panel of this invention offers additional quality improvement over unitape panels, as will be described in further detail elsewhere herein.

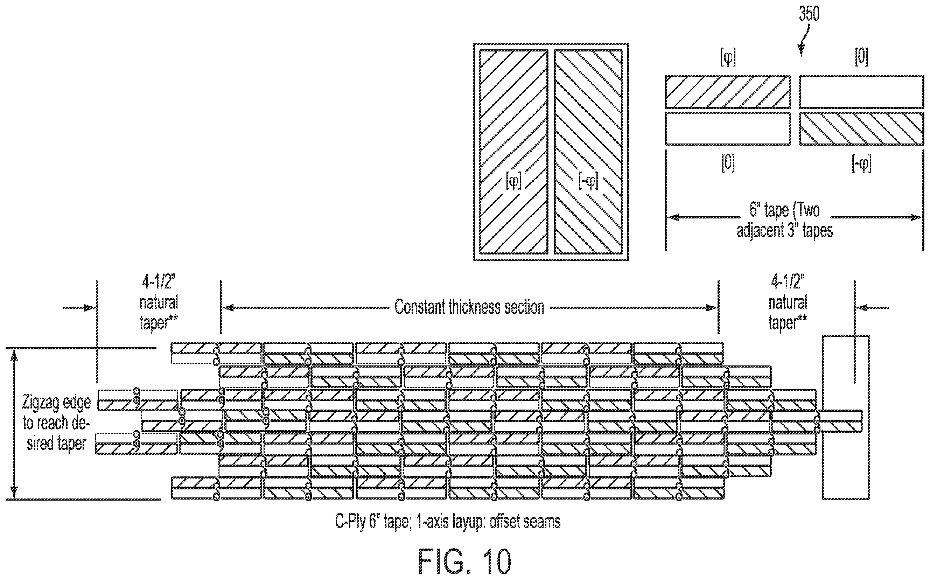

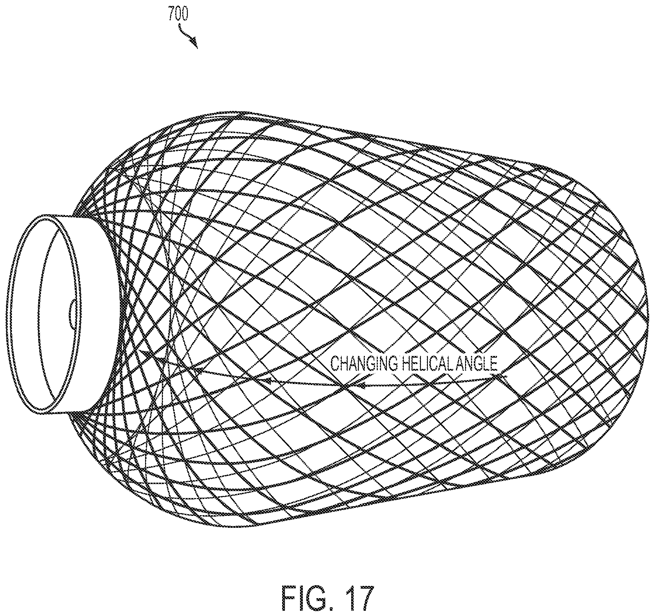

In at least those embodiments comprising sub-laminate modules 15 as depicted in Figure 2, one-axis layup processes may be up to seven (7) times faster than conventional four-axis layup processes employed with the more conventional unidirectional (0° plies only) laminates. An additional benefit of one-axis layup for flat or curved panels and the equivalent of "all hoop" layup or winding of circular or non-circular cylinders (see Figure 17 and associated discussion elsewhere herein) is the absence of residual stress from lamination. Such lamination stress is substantially eliminated at least in part because there are no cross layers in one-axis layup. The resulting process is thus more manufacturing defect tolerant, as compared to conventional processes known and understood in the art. Non-limiting and exemplary embodiments incorporating a one-axis layup include a [0/+30] tape for stringers, spars and wing skins, and [0/+60] tape for vessels, fuselage and pipes. When the latter tape is laid or wound in all-hoop direction, as described elsewhere herein, the resulting ply orientations will be [90/+30], or a 90 rotation from the starting tape of [0/+60]. These tri-angle tapes can be either directly from non-crimp fabric (NCF) (as also described elsewhere herein) that would be three-ply thick, or use a particularly configured tape, shown in, for example, Figure 10, that is two-ply thick. The thinner triangle tape will induce less internal stress at the seams between adjoining tapes than the three-ply thick tape. It should be understood that a one-axis layup is also possible with bi- angle configurations, as described elsewhere herein.

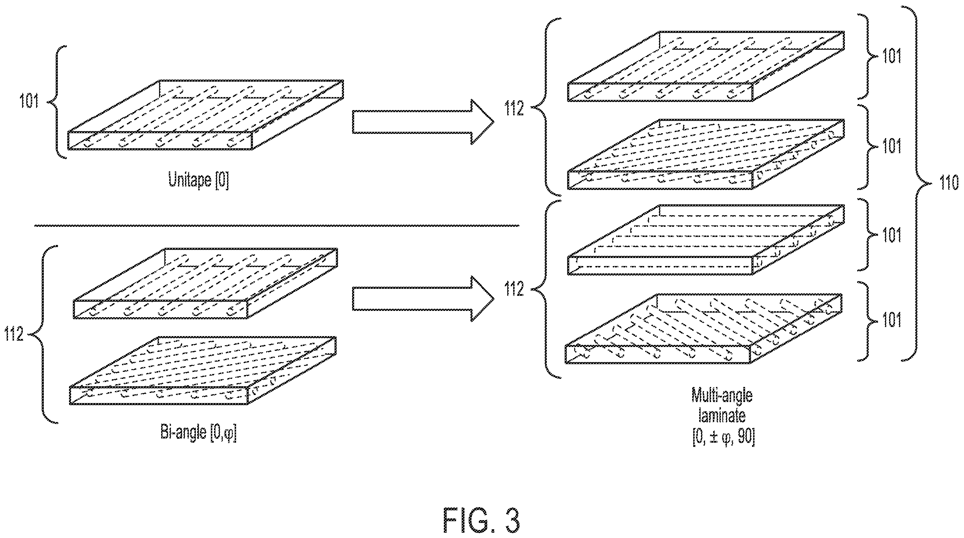

Two-axis layup processes, as will be described later herein in the context of sub-laminate modules 15 or ply layers 12a, 12b, may similarly be more efficient, up to 2.7 times faster than conventional four-axis layup processes employed with the more conventional unidirectional laminates. This time saving is derived from the elimination of the layup of the off-axis plies which takes as much as three times longer than the layup of the 0° and 90° layup. As described previously herein, the scrap rate is also reduced when the layup of off-axis plies can be eliminated. As non-limiting examples, in those embodiments incorporating NCF stitching, a four layer laminate structure that would have conventionally only been achievable via a four-axis layup process of unidirectional tape (see unitape 101 of Figure 3, as will be described in further detail below) may be achievable via a two-axis layup process with an unfolded bi-angle sub-laminate 112 (see Figure 3 again) or via a one-axis layup process with a folded bi-angle sub-laminate 112, all as will be described in further detail elsewhere herein.

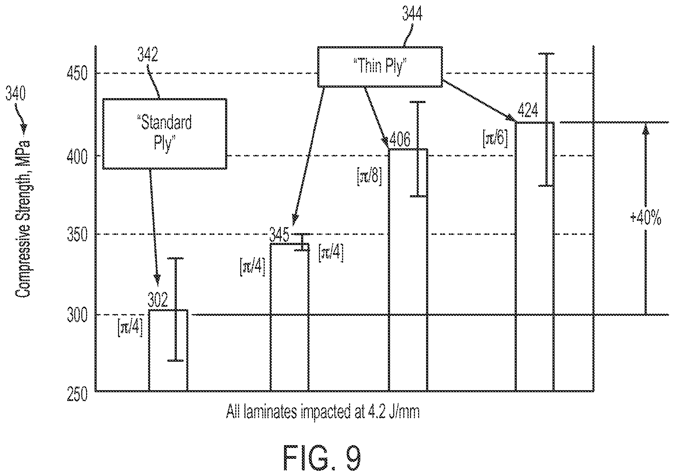

In contrast with the conventional four-axis layup process for unidirectional tapes, in the case of cylindrical or pipe applications (as will be described elsewhere herein), a one-axis layup may be achieved via an all-hoop winding with a multi-angle tape configuration. Such tape may be a three-ply triax such as a [0/+30] configuration. It can also be achieved through a two-ply bi-angle sub-combination, as also described elsewhere herein. Such may have applications further for flat and curved panels, as well as circular and even non-circular cylinders. The tape winding or laying process may further advance per pass so as to provide a seam offset, as also described elsewhere herein. The benefits achievable according to various embodiments with regard to reduced layup procedures are, as alluded to above, inherently related to the rotation of sub-laminate modules and/or ply layers so as to as efficiently as possible form composite laminate structures having desirable material characteristics. In certain embodiments, such benefits may be further enhanced by spiral (or helical) stacking processes, whereby sub-laminate modules are incrementally rotated relative to each other, so as to produce composite laminate structures having quasi-isotropic, orthotopic and other desirable material characteristics, as will be described in further detail below. Additional details regarding lay-up processes in general may also be found within U.S. Patent Application 2012/0177872. Although composite laminate structures 1, 5, and 10 (along with those that will be described elsewhere herein) may be manufactured in sheet form, as generally described and illustrated within U.S. Patent Application Publication No. 2012/0177872, it should be understood that according to various embodiments, as will be described in further detail below, the laminate structures may be constructed instead in tape form. As such, although reference will be made generally throughout to laminate structures and/or sub-laminate modules thereof, it should be understood that such reference is intended to encompass both sheet and tape formed products. Amongst other benefits, laminate tape configurations enable winding of such around three-dimensional objects (e.g., aircraft fuselages) with more flexibility of angular orientation thereof than with conventionally wider sheet materials. As commonly known and understood in the art, sheet materials are generally formed with a width of 48 inches. Tapes according to various embodiments described herein may be three inches in width, six inches in width, or twelve inches in width. Still other widths may be envisioned, as may be desirable for various applications. Thus the difference between wide tape and sheet form may disappear. Pertinent concerns with tapes, however, further involve discontinuous seams of off-axis plies, their offset in stacking to mitigate the local stress concentration, and the natural tapering at free edges must all be engineered. This utility and many benefits of the various embodiments are thus based at least in part upon the particularly configured tapes described herein to deliver the non-limiting benefits of performance and cost advantages. According to various embodiments, the tapes may be cut from the wider sheets. As a non- limiting example, a 48" sheet would thus result in four 12" tapes; or eight 6" tapes; or sixteen 3" tapes. Still further, 3" tapes may be formed by folding 6" tapes in half (e.g., along a central axis), as has been previously described herein and in U.S. Patent Application Publication No. 2012/0177872 (in the context of sheet material therein). In other embodiments, as a non-limiting example, 6" tapes may be formed from two 3" tapes; or still further from one 4" tape and one 2" tape; or still further from any of a variety of combinations of "sub-tapes" as may be desirable for particular applications. Stitching such as the NCF described previously herein (or otherwise) or a bonding material may be provided between such "sub-tapes" during the formation of a final tape product. Thus triangle tapes with a two-ply thickness, sometimes referred to as a herringbone configuration (see also Figure 10), offers attractive opportunities for one-axis and all-hoop layup of structures, and also for the non-limiting example of 2-axis layup of a [π/6] composite laminate structure with a four-ply thickness to improve compression-after-impact strength to a degree not otherwise possible with conventionally known and used unitape configurations, as may be understood with reference to Figure 9.

It should further be understood that, according to various embodiments described herein, any cutting of sheets into tapes generally occurs following a prepreg process. Thus, while fabrics within the ply layers and/or the sub-laminate modules and/or the laminate structures formed thereby are generally, in accordance with certain embodiments described herein, furnished as "final" products for shipment to end-product manufacturers (e.g., aircraft suppliers) as dry fibers, if such are provided for shipment in tape form, such are generally pre-impregnated with resin (e.g., prepreg) prior to shipment and transport. From a practical perspective prepreg treatment of the tapes is necessary in certain embodiments so as to ensure the tape remains properly aligned and oriented during transport. Non- limiting examples of resin application treatments, as are also commonly known and understood in the art, include Resin Transfer Molding (RTM), Vacuum Resin Transfer Molding, Heated Vacuum Assist Resin Transfer Molding, out of Autoclave Processes, and Resin Film Infusion.

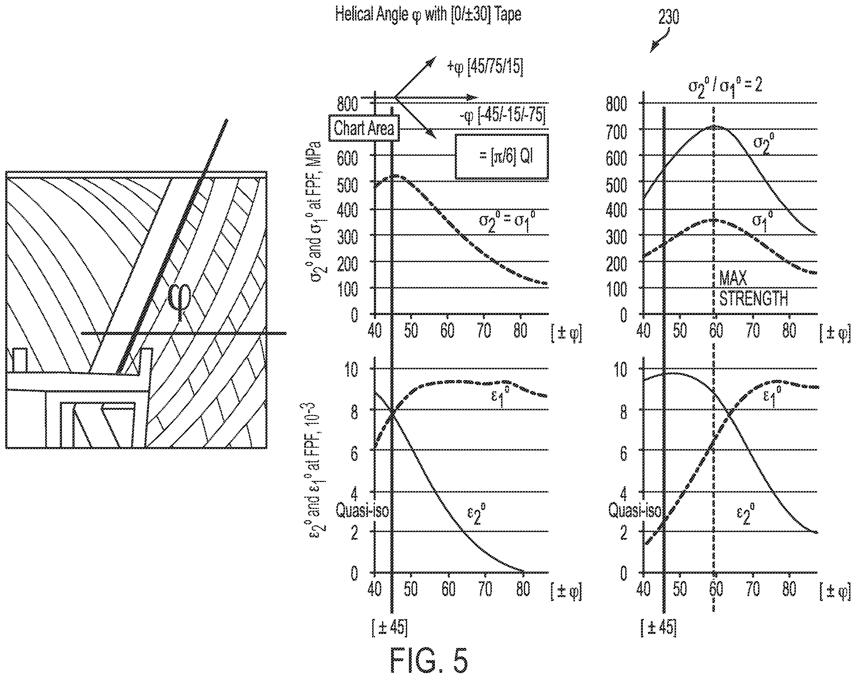

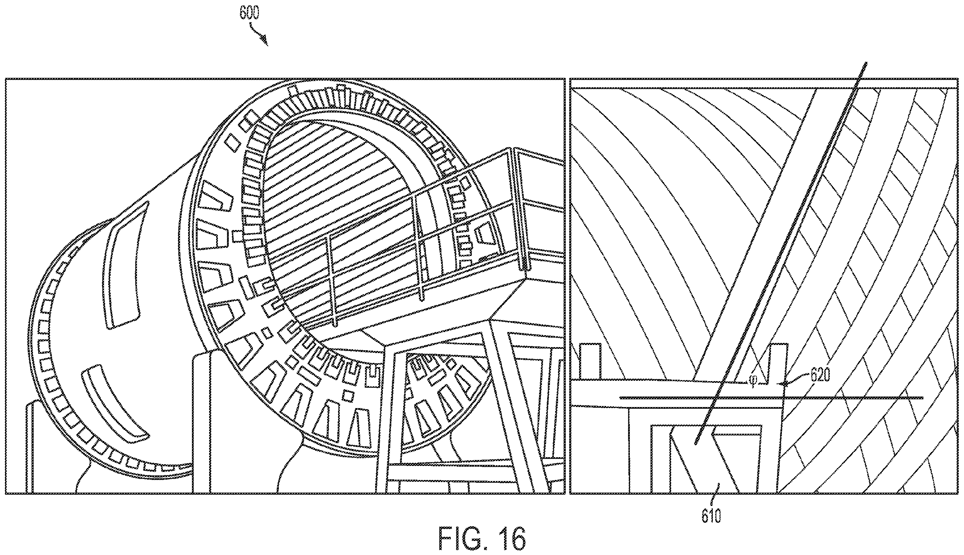

Thus, according to various embodiments, it should be understood that at least three products may be manufactured using the bi-angle, thin-ply, and/or pliable configurations described elsewhere herein, including conventional sheet materials supplied post prepreg treatment, conventional sheet materials supplied in dry form, and pre-cut and prepreg treated tapes. In certain circumstances, dry form supplied materials may be accompanied by an RTM application device, so as to enable the final customer to resin-impregnate the dry-shipped product at the time of utilization thereof. In other circumstances, an RTM application device may not be provided, particularly where final customers are known to possess their own tools for resin application and other common industry-based tasks. Additional details regarding resin impregnation treatments and the like may be found within U.S. Patent Application Publication No. 2012/0177872. In the context of composite tape configurations, various tape winding techniques are commonly known and understood in the art for applying such at various angles relative to an associated structure (e.g., an aircraft fuselage). One non- limiting example is the automated tape laying (ATL) machines, which conventionally applies 6" or 12" unidirectional (i.e., 0° uni-tape) composites. Exemplary ATL machines, as such are commonly known in the art, may be seen in at least Figures 5 and 16 in the context of the application of unidirectional tape. Conventional ATL machines are equipped at least for safety purposes with a cutter that is suitable for cutting tape up to twice the thickness of conventional unidirectional tape. That being said, ATL machines possess inherent limitations, including the non- limiting example of being constrained to only laying down a single tape at a time.

With particular reference momentarily to Figure 5, such shows the use of a [0/±30] tape for two applications. The first shown on the left is the case when the two normal stresses are equal which exists in a spherical head under pressure as in a bulkhead. The optimum helical angles for the tape would thus be at ±45 degrees. The resulting laminate would be quasi-isotropic. Notably, the maximum hoop stress (shown in the upper left hand chart) reaches over 500 MPa at the ±45 degree orientation. The second exemplary application, as illustrated in the right-hand column charts, relates to internal pressure in a circular cylinder like in a pressure vessel. As may be seen, the optimum helical angles would be ±60 degrees, wherein the maximum hoop stress is approximately 700 MPa. The theoretical exemplary data from the charts of Figure 5 both demonstrate characteristics achievable via a two-axis layup, although it should be understood that comparable theoretical results based upon mathematical models may be achievable via a one-axis layup. In either scenario, as the loading conditions change the helical angle will change and the various embodiments described herein provide a desirable balance between performance and cost across a wide range of angular layups, such as which conventional unitape configurations cannot offer. As may be further understood from Figure 5, various quasi-isotropic and orthotropic laminate structures may be constructed. The left-hand two charts illustrate theoretical data (as detailed above) for an exemplary quasi-isotropic structure [+15/+45/+75]. The right-hand two charts, on the other hand, illustrate theoretical data results (as detailed above) for an exemplary orthotropic structure. Notably, this particular exemplary structure, in its final composite laminate form, may also be balanced, namely where such is formed from [0/+30] tape with 60 degree layup angle. Specifically, the final laminate structure is [+30/+60/90/90], which is both orthotropic and balanced. Additional orthotropic laminates may be made from [0/+25/0] and the like.

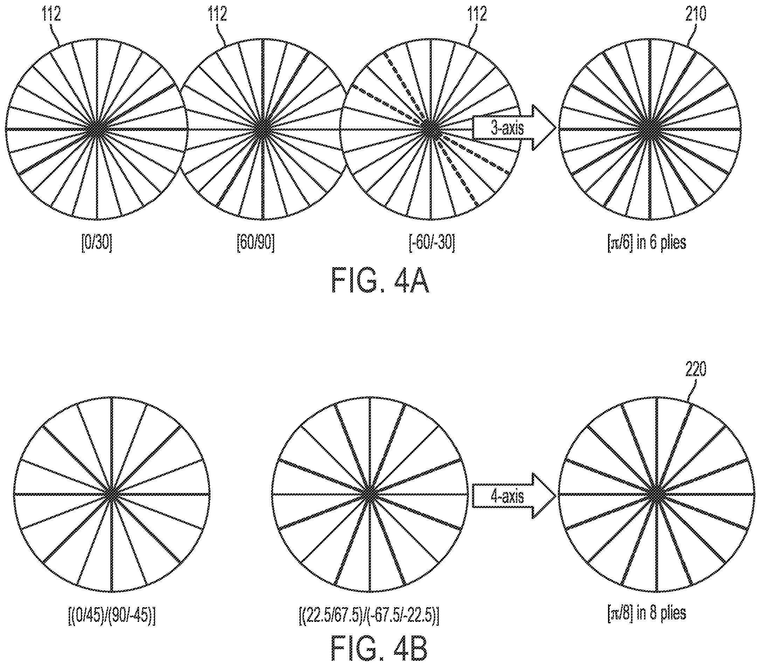

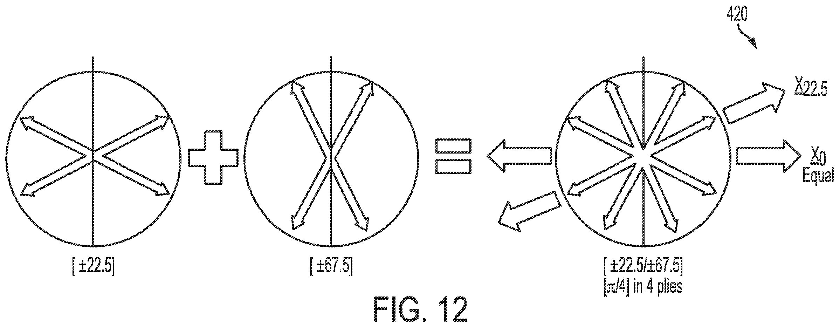

Thus, where characteristics of a folded or rotated laminate structure (as described elsewhere herein) or a laminate structure formed from spiral stacking at sequential angular increments (as also described elsewhere herein) are desirable, the ATL machines may be utilized to wrap up and then down, thus providing the variations, as may be desirable. Such may be understood with reference to at least Figure 16, wherein it may be deduced that the ATL machine 610 may first wind in a downward direct relative to the cylinder (e.g., airplane fuselage), followed by a winding in an upward relative direction - thus resulting in varying orientations of ply angle 620. Such a process could be implemented with the non-limiting examples of applications involving wrapping a [0/30°] sub-laminate module into a [π/6] quasi-isotropic laminate structure by sequential rotation to [60/90°] and [-60/-300 ] orientations with each wrap passing (see Figure 4A) and/or wrapping a [±22.5 °] sub-laminate module into a [π/8] quasi-isotropic laminate structure by sequential rotation to a [±67.5°] orientation with each wrap passing (see Figure 12), both of which as will be described in further detail below. Other embodiments may utilize [0/45°] sub- laminate modules and/or tapes, as may be desirable for particular applications.

### Bi-angle, Thin-ply Structural Characteristics

### a. Exemplary Configurations

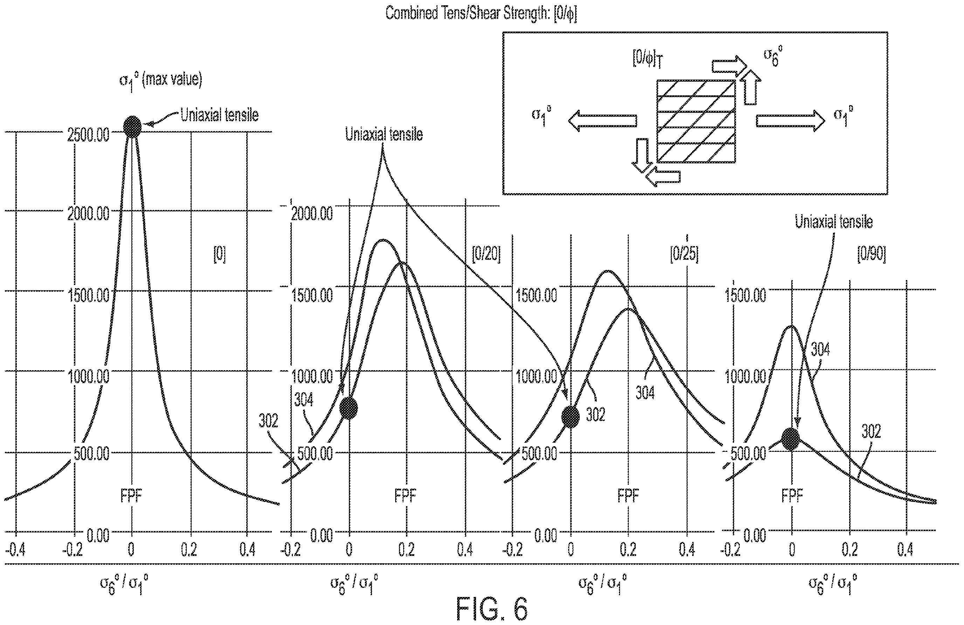

Turning now to Figure 3 with particular emphasis, an exemplary embodiment of a bi-angle, thin ply laminate construction is illustrated, as such may be formed via sub-laminate module 112. As may be seen, each sub-laminate module 112 comprises two discrete ply layers, each oriented relative to one another at a ply angle ϕ, thus forming the desired bi-angle configuration. Generally speaking, the ply angle ϕ may be any acute angle, although according to various embodiments, the ply angle is less or equal to 45°. Exemplary configurations, with reference further to Figures 4A-B, include ply angles ϕ of 30°, and 22.5°. Still further configurations include the non-limiting examples of 20°, 25°, and even 15° (see also Figure 6). Any of a variety of ply angles across the range of 0°< ϕ <45° may be envisioned, depending upon the particularly desired material characteristics, as will be described in further detail below. Still other applications may call for larger angles, such as all hoop winding of vessels, fuselage and pipes, where [0/+60] tape may be suitable for the anticipated loading conditions, and various embodiments described herein may be capable likewise of producing such configurations.

Returning to Figure 3, it should be understood that according to various embodiments, the sub-laminate modules 112 may be manipulated (e.g., via a layup process, as previously described) to form various laminate structures 110. Notably, at least the illustrated laminate structure 110 of Figure 3 may be formed via a two-axis layup process, namely by laying (or winding) the sub-laminate module 112 first as illustrated, then by laying (or winding) the sub-laminate module in a rotated configuration, as denoted by the two lower illustrated layers of the structure 100 illustrated in Figure 3. In other embodiments a single sub-laminate module 112 may be folded upon itself (e.g., in half), thereby enabling formation of the illustrated laminate structure 110 via a one-axis layup procedure, as has been described elsewhere herein.

It is worth noting that with conventional configurations (e.g., unitape) a four-axis layup process would be required, such that four discrete unitape layers would be sequentially provided and oriented at respectively differing angles so as to form from four unitapes 101 the multi-angle laminate 110. In contrast, various embodiments, as described elsewhere herein may form the multi-angle laminate 110 via a two-axis layup process using two sub-laminates 112 or via a one-axis layup process, whereby a sub-laminate module 112 may be folded upon itself (at least in sheet form) so as to define all four layers of the multi-angle laminate 110 with a single layup. It should be noted, however, that such folded configurations are not as commonplace in the context of laying up tapes, versus sheet form laminate structures.

Turning now to Figures 4 A and 4B, however, according to various embodiments mere rotating and/or folding of sub-laminate modules 112 may not be sufficient, in and of itself, to acquire laminate structures exhibiting material characteristics (e.g., strength, stiffness, and the like) comparable to that of conventional metal-based laminate structures, as commonly known and used in the art. In these and other embodiments, spiral stacking of the sub-laminate modules 112 may be desired, such that by incrementally rotating the angle of orientation (i.e., defining an incremental angle) of the ply layers therein, in discrete increments about a 360° arc, desirable [π/6] and [π/8] laminate structures 210, 220 may be formed. Other possible non-limiting and exemplary configurations may include [π/3] and [π/4] laminate structures, as may be formed from [0, 45°] and [0, 60°] tape orientations. It should be understood, however, that the stacking is not limited to a sequential rotation of the angle of orientation with each successively laid ply layer, and in some applications the laying need not be sequentially ordered, particularly where one or more ATL machines are utilized for the layup of laminate tapes.

For purposes of definitions, it should be understood generally what is meant by the various [π/6] and [π/8] configurations described and referenced herein. Generally speaking, when describing angular orientations, the parameter [π] is commonly known and used to reference a 180° angle. Thus, denotations of laminate structures are uniformly referenced in a shorthand and consistent manner so to indicate how many individual ply angles are contained within the structure. For example, a [π/6] configuration will have 6 discrete orientations spread across the 180° angle. A non-limiting example would be a composite laminate structure formed from [0, 30], [60, 90], [-60, -30] oriented layers. A [π/8] configuration would thus have 8 discrete orientations spread across the 180° angle, whereas a [π/4] configuration would have 4 discrete orientations spread across the 180° angle. Other configurations may be thus understood by analogy, and it may be further understood that in certain embodiments, the 180° span represented by [π] need not necessarily be oriented across 0° to 180°, wherein 0° is aligned with a machine direction, as described elsewhere herein. Indeed, for certain embodiments described herein, whereby the 0° machine direction ply is dispensed with, the [π] angle may be spread such that, for example both orientations of a [±22.5 °] sub-laminate module are included therein.

Returning to previous description, noting that stacking need not necessarily be spiral or sequential in nature, it should be understood generally that spiral stacking is incorporated within the three-axis layup shown in Figure 4A, whereby such is automatically satisfied via the rotation therein to achieve the [π/6] configuration with six total plies. That being said, the four-axis layup shown in Figure 4B does not incorporate a spirally stacked configuration. Instead, inter-laminar angles of 90° are provided, which require special care during the layup thereof. Particularly, while spiral stacking in this manner results in adjacent plies or sub-laminate modules being oriented less than or equal to 45° degrees relative to one another; non-spiral can have inter-laminar angles of up to 90 degrees. Notably, the smaller the inter-laminar angles the smaller the inter-laminar stresses. Thus, using conventional configurations, this structure has generally been considered impractical, particularly when small angle layups are desirable, as, for example, at an angle of 30° six layers would be needed for each sub-laminate. Incorporating conventional mid-plane symmetry, as oftentimes would be deemed necessary (as described elsewhere herein), the minimum laminate thickness would thus be twelve layers, which in many instances would exceed allowable weight and/or cost parameters. Various embodiments as described herein can thus minimize these problems by at least a factor of two, namely because the minimum laminate thickness would be one half, and incorporate a three-axis layup, versus six.

With reference specifically to Figure 4A, it should be understood that an exemplary spiral (or sometimes referred to as "helical") stacking procedure may form, according to various embodiments, desirable composite laminate structures having material characteristics comparable to metal-based laminate structures, but with minimal gauge thicknesses. Such is due, at least in part to the manner in which individual ply layers within the sub-laminate modules 112 according to various embodiments may be configured such that individual tows of fibers contained therein are spread. Plies made from tows of fibers that have been spread have smaller "resin-rich" areas as compared to plies made from traditional tows that have not been spread (and which are thus generally circular in cross section), and as such are stronger. Such, in certain embodiments, results in thinner ply layers; thus, likewise when compiled, thinner laminate structures 210, 220, and the like. Various methods for spreading fiber tows, whether carbon fiber or otherwise formed, are described in U.S. Patent Application Pub. No. 2006/0093802 .

According to various embodiments employing thin ply layers, such as those made with spread tows, the layers may be as thin as 0.125 millimeters per layer, with a corresponding weight of approximately 75 g/m2 . In certain embodiments, the layers may be substantially thinner than 0.125 millimeters, with weights substantially varying relative to 75 g/m2 . In at least one embodiment, weights may range from 25 to 100 g/m2 . Any of a variety of combinations may be envisioned, provided such result in relatively lightweight and thin ply layers. In these and other embodiments, as has been previously described herein, homogeneity may be achieved, particularly with asymmetric structures, with much fewer layers (in the form of the sub-laminate modules according to embodiments of the invention) than previously necessary with conventional unidirectional laminate structures. Still further, as will be described in further detail below, additional benefits such as improved Compression Strength After Impact (CAI), reduced delamination, improved anti-penetration characteristics, and quasi-isotropic traits may be achieved with fewer layers and/or thinner overall laminate structures, in contrast with conventional configurations.

Indeed, in certain embodiments wherein individual ply layer thicknesses are on the order of 0.0625 millimeters (with sub-laminates of two ply layers having thicknesses of 0.125 millimeters), total laminate structure thickness, whether [π/6] or [π/8] may be less than one millimeter. In other embodiments, total laminate structure thickness (e.g., of laminate 210 of Figure 4A) may be less than two millimeters. However, it should be understood that in any of these and still other embodiments, the total laminate structure thickness is substantially less than that achievable with the same number of ply layers utilizing conventional laminate configurations. In this manner, the various embodiments of bi-angle thin-ply laminate structures described herein are able to achieve comparable material characteristics with those of conventional metal-based structures, but with much thinner and/or lighter structures, both of which as are desirable traits in the industry. As non-limiting examples, via various embodiments described herein, a [π/6] laminate structure can be formed with a three-ply overall thickness and [π/8] with a four-ply overall thickness. Both exemplary constructions are 50 percent thinner than if conventional unitape were used, not to mention the significant savings in layup time that can be realized further via various embodiments described herein.

Particularly returning to Figure 4A, illustrated therein is a [π/6] laminate structure 210 as may be formed according to various embodiments from six total plies, or three bi- angle laminate sub-modules 112 (see also Figure 3). During the spiral stacking procedure, respective sub-modules may be laid, according to certain embodiments, in an incremental fashion at [0/30], [60/90], and [-60/-30] orientations, although each individual sub-module is at least initially formed from the same [0, 30] basic structure. The basic [0, 30] structure may in certain embodiments be a [±15] structure, as such would inherently maintain the same angular orientation for a [π/6] laminate structure, although incorporating a differing underlying configuration. Thus, a three-axis [π/6] layup procedure would involve three sub-laminate structures 112, each rotated relative to one another by 60°, such that the formed laminate structure 210, in its entirety comprises substantially equally spaced ply layers across a totality of 360°. Amongst other structural characteristics, such configurations provide improved compressive strength (and inherently related anti-penetration) capabilities, along with quasi-isotropic characteristics not conventionally achievable with a laminate of minimal thickness, in certain instances no more than one millimeter. These particular structural characteristics, along with the benefits and advantages thereof, will be described further below with reference to at least Figures 6-9.

Turning first to Figure 4B, another exemplary [π/8] bi-angle, thin ply laminate structure 220 is illustrated, which may also according to various embodiments be formed with a total thickness of no more than one millimeter. As previously noted herein, in certain embodiments, the total thickness thereof may be slightly more or less than one millimeter, provided that the total thickness remains substantially less than that of an analogous number of conventional "thick" ply layers arranged in an analogous fashion. As may be seen, the formed laminate structure 220 may be formed from a combination of [0/22.5°] ply layers or a combination of [0/45°] ply layers, oriented at 22.5° and 67.5° angles, so as to provide uniformly distributed sub-laminate modules across the entirety of a 360° arc, similarly as provided in the afore-mentioned [π/6] laminate structure of Figure 4A. Similar to the above, the basic [0, 45] structure may in certain embodiments be a [±22.5] structure or even a [±67.5], as both would inherently maintain the same angular orientation for a [π/8] laminate structure, although incorporating a differing underlying configuration.

In contrast with the [π/6] laminate structure, wherein discrete ply layers are spaced apart at uniformly distributed 30° angles, the uniform distribution across the exemplary [π/8] laminate structure of Figure 4B according to various embodiments is 22.5°, thus providing a narrower bi-angle thin-ply configuration with only eight total sub-laminate modules (e.g., 16 total ply layers). Exemplary total thicknesses of the laminate structure 220 may be, in certain embodiments, comparable to those achievable via the [π/6] laminate structure, including as non-limiting examples total thicknesses of less than or equal to one millimeter.

With reference now to Figure 5, yet another [π/6] laminate structure is referenced, whereby the uniform distribution remains at 30° angles, but instead of orientations at [0/30], [60/90], and [-60/-30], as illustrated in Figure 4A, the discrete sub-laminate modules may be further rotated during the spiral stacking process such that the orientations lie, in at least this embodiment, at [15/45], [75/-75], and [-45/-15]. Such, amongst other structural characteristics, as illustrated in at least Figure 5 further capitalizes upon the quasi-isotropic nature and strength of [±45 °] orientations, even though the ply angle formed between each the respective layers of the sub-laminate modules remains 30°, as illustrated in Figure 4A. At the same time, configurations such as that illustrated in Figure 5 achieve such characteristics without significantly sacrificing the desirable characteristics (e.g., strength) achievable traditionally with 60° orientations. In this manner, it should be understood that various desirable material characteristics, such as strength and stiffness may be manipulated so as to achieve a desirable combination thereof that is not only complementary to those values achievable via conventional metal-based laminate structures, but achievable according to the various embodiments of orientations and configurations described herein both with less layups and much thinner bi-angle sub- structures. b. Load-Sharing Characteristics

Turning now to Figures 6-9, various material characteristics achievable via the [π/4], [π/6], and [π/8] laminate structures described herein are further illustrated for purposes of explanation. It should be understood generally that the data illustrated in these figures is theoretically -based upon mathematical studies and analysis; as such, no actual data results, from tests or otherwise, are incorporated therein.

Figure 6 illustrates in particular the manner in which, as the ply angle between bi- angle sub-laminate structures decreases from 90° and in particular to less than 45°, the unidirectional (0°) layers 302 and off-angle (not 0°) ply layers 304 more equally share imposed forces by encountered loads. With reference in particular to the [0/25] and [0/20] configurations, it may be seen that the combined tensile and shear strength values for each of the discrete layers more closely reflect one another, than do the individual ply layers in the further illustrated [0/90] configuration. As a result, less uncertainty and risk exists regarding potential first ply failures dependent upon the orientation of load relative to the fiber orientation. It is therefore possible to utilize shallow angles between two plies to close the gap between their load-carrying capabilities.

Remaining with Figure 6, such illustrates specifically the combined stress space of a normal stress and shear stress plane. Thus, in the horizontal axes the plot of the ratio of these two stress components is shown; in the vertical axes, the maximum values of the normal tensile stress are shown. Closing of the gap between 302 and 304 when the shallow angle decreases is a very effective way to increase the first-ply-failure strength, thus the utilization of the ply strength. Various embodiments described herein take advantage of this material characteristic, such as cannot be easily accomplished with conventional unitape laminates, as incorporating the necessary shallow angle therein would result in large scrap and require larger assembly machines, as described elsewhere herein. It should be noted, however, that in other cases such as the all-hoop winding for cylindrical vessels, larger angles such as 60 degrees may be required, and in such configurations the inherent advantage of shallow angles will be somewhat relatively reduced. However, it should be understood that even under such constraints, optimal combinations of a composite structure may be achievable, as would not otherwise be feasible with conventional unitape configurations. c. Quasi-Isotropic Characteristics

Quasi-isotropic, by definition, means that material characteristics and properties are constant regardless of its relative orientation. With reference to Figures 4A-4B, along with Figure 5, it should be understood that according to various embodiments described herein, the formed [π/4], [π/6], and [π/8] laminate quasi-isotropic. As may be seen in Figure 4A, for example, the [π/6] laminate structure formed via spiral stacking possesses plies uniformly distributed across a 360° arc, such that regardless of the orientation of an imposed load or force, the laminate structure responds to such in a substantially uniform manner. Such constant values however apply only to the stiffness behavior.

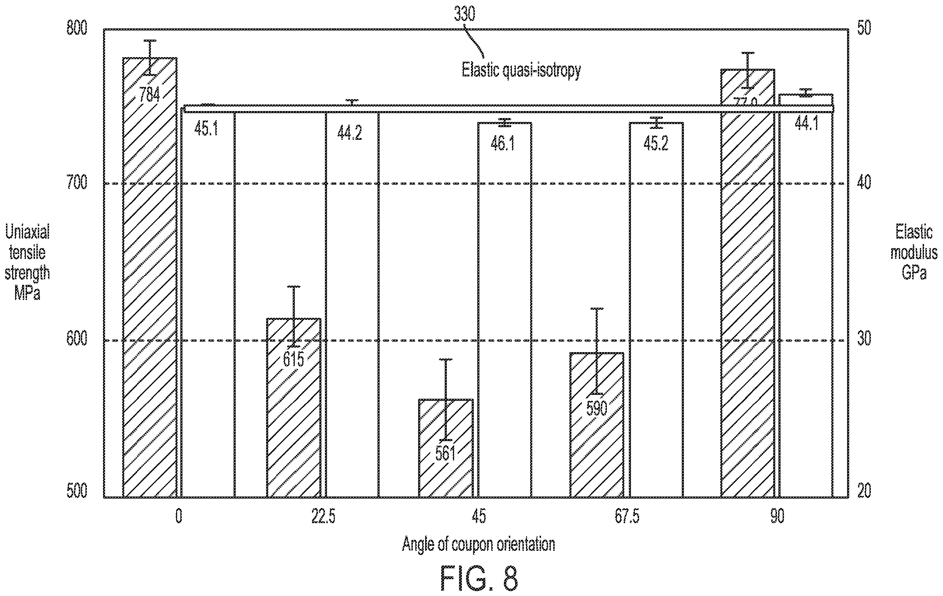

Figure 8 further illustrates this constant elastic (e.g., stiffness) quasi-isotropic material of the [π/4] laminate structures described herein. As may be seen, the elastic modulus illustrated in GPa, which is indicative of stiffness values of formed laminate structures according to various embodiments, is relatively constant across the various angles of coupon (e.g., test sample) orientation (see on x-axis), as between 0 and 90 degrees, regardless of particular orientation. Such may be understood from the sequentially spaced, right-hand bar charts of relatively uniform height. The uniaxial tensile strength in MPa is also illustrated in the left-hand bar charts, is not constant and varies dependent upon angle of orientation, with the strongest orientations lying at 0 and 90 degrees. d. Comparative Strength Characteristics

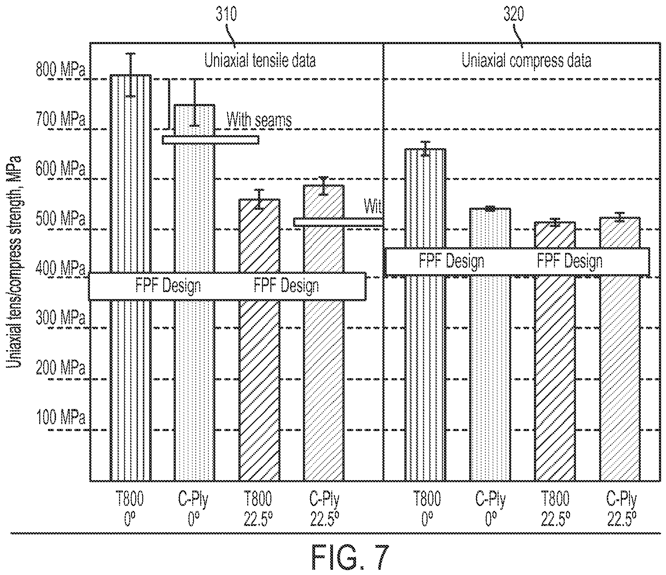

Figure 7 illustrates further material characteristics achievable via various embodiments of various orientations of the bi-angle thin ply laminate structures described elsewhere herein, including the non-limiting example of [π/4] laminate. Specifically, Figure 7 illustrates comparative tensile and compressive strength data of the laminate structures made from C-Ply^{®} prepreg product (available from Compagnie Chomarat) according to various embodiments relative to such data for conventional T800 composite laminates, as the latter are commonly known and understood in the art as being desirable for primary structures of aircraft, including wings, fuselage, vertical fin and horizontal stabilizer surfaces. Where elsewhere herein T700 and T800 composite laminates are referenced, as both are commonly known and understood in the art, it should be understood that such differ primarily in their tensile strength.

Remaining with Figure 7, it should be emphasized that uniaxial tensile and compressive strengths at 0° and 22.5° degrees for both T800 and T700 are shown, namely because in this measured data, the C-Ply^{®} product tested was formed from T700 material. The first-ply-failure strength levels derived therefrom are calculated using some assumed data points and a degree of classical laminated plate theory; however, continued tests and measurements are ongoing in this regard. Notably, it should be understood that the first- ply-failure levels illustrated herein should be considered conservative estimates in this regard.

Still further, although not expressly illustrated on Figure 7, the uniaxial tensile and compression strength data 310, 320 illustrated therein correspond to tests performed with the inventive C-Ply^{®} according to various embodiments described herein being vacuum bagged, as compared to the T800 laminate being autoclaved. Specifically, a vacuum bag produced [π/4] laminate structure with ply layers formed from T700 material and oriented at 0 and 22.5° achieved comparable, and in certain instances improved, uniaxial and compression strength values relative to an analogous T800 laminate with ply layers similarly oriented and produced via autoclave.

As commonly known and understood in the art, vacuum bagging is much less expensive than autoclaving, as the latter requires curing at 100 psi or more in specialized machinery. Vacuum bagging, on the other hand, may be carried out at standard atmospheric pressure conditions (i.e., 14 psi), thus significantly reducing its costs. As a result, the material characteristics achievable with the inventive C-Ply^{®} laminate structures described herein prove advantageous, as industries adhering to autoclave processes due to concerns of quality, performance, and/or certification standards may be persuaded to incorporate the laminate structures according to various embodiments herein so as to significantly reduce costs with no impact to, and perhaps in some instances an improvement in, material characteristics, e. Compression After Impact Strength Characteristics

Turning now to Figure 9, an additional material characteristic achievable via the bi-angle, thin ply laminate structures described herein relates to compression strength after impact (CAI), as such measurement is commonly known and understood in the art. As Figure 9 illustrates, various [π/4], [π/6], and [π/8] laminate structures as described elsewhere herein, after being impacted with a particular force (e.g., 4.2 J/mm), retain a significantly greater compressive strength value than do conventional unidirectional [π/4] "standard ply" laminates. As a non-limiting example, a [π/6] laminate structure incorporating bi-angle thin ply sub-laminate modules, also as described previously herein, may exhibit a 40% increase in compressive strength, post impact, relative to a "standard ply" laminate impacted with the same force. Even comparing a further analogous [π/4] "bi-angle, thin-ply" laminate to a [π/4] "standard ply" laminate results in, as illustrated by Figure 9, in at least a 10% increase in CAI values, namely from 302 MPa to 345 MPa. Comparable [π/8] "bi-angle, thin-ply" laminates result in at least a 30% increase.

As a result, comparable CAI material characteristics can be achieved according to embodiments of the invention with thinner overall laminate structures relative to the standard ply construction, with structure of equal or comparable thickness having improved CAI material characteristics. In particular, it further disproves, at least in the contexts of the laminate structures described herein, the commonly held industry perception (e.g., in the aircraft industry) that thin plies are both weaker and more costly because they require a greater number of passes (e.g., when laying tape) and thus a greater thickness to achieve strength, resistance, and other performance-related material characteristics comparable to that of conventional unidirectional "standard ply" laminates. Indeed, quite to the contrary, as Figures 7 and 9 illustrate, the bi-angle, thin ply laminate structures described herein offer comparable material characteristics with less cost and a thinner overall laminate structure.

Related to improved CAI material characteristics, as described above, the various embodiments of bi-angle thin ply [π/4], [π/6], and [π/8] laminate structures described herein provide a corresponding increase in penetration resistance. In other words, for armor-related applications and/or containment ring applications (as described elsewhere herein), similarly due to the uniformly and broadly dispersed shallow angle and thin-ply layers as emphasized in the context of retained compressive strength, penetration of the laminate structure by an object imposing a force is also significantly reduced. Indeed, for at least the [π/6] and [π/8] laminate structures described herein an approximate 40% increase in penetration resistance has been observed, at least in part mirroring the enhanced material characteristics observed relative to CAI values. The gains in having increased damage tolerance, savings in layup costs, both coupled further with thinner and more lightweight total laminate structures provides significant advantages over conventional unidirectional "standard ply" configurations, as commonly known and understood in the art. Similarly, where the controlling design criterion is CAI, various embodiments as described herein provide thinner laminates that are both lighter and less costly than conventional laminates, but with comparable or improved CAI values.

### Staggered Seam Characteristics

With momentary reference to Figures 7 and 10, a still additional advantage provided by the various embodiments of bi-angle thin ply [π/4], [π/6], and [π/8] laminate structures described herein relates to the relative ease with which tapering may be achieved. As described at least in part in U.S. Patent Application Pub. No. 2006/0093802, asymmetrical laminate structures may be manipulated much more easily than symmetrical laminate structures, wherein sequential ply-layer drops are utilized for purposes of introducing a tapered surface upon a wrapped structure. Still further, however, seam staggering techniques may be employed to achieve similar tapered surface results, specifically in the context of tape winding applications (versus laminate sheet applications). A particularly beneficial attribute is further the feasibility of a one- axis layup for narrow bodies like wings, blades and shafts.

With particular reference to Figure 10, an exemplary 6" tape 350 is illustrated, which has ply orientations of [0/+ϕ], oriented about a central axis, as may be achievable via, as a non-limiting example, the [0/30°] configurations described previously herein. By laying up the tape with offset seams, it may be further understood from the lower illustration of Figure 10 that a natural taper may be acquired with relative ease. Such taper is the natural result of having staggered discontinuity seams in the multi-angle tapes. The distance of overlap may be varied dependent upon the length of the natural taper desirable although in at least the illustrated embodiment a 4-1/2" natural taper is envisioned with use of a 6" tape. Opposing the sequentially descending taper (see right end of laminate structure in Figure 10) a zigzag edge will necessarily be formed, at least in part due to a zigzag pattern of laying the tape itself during the layup winding process, so as to achieve the desired taper.

It should be understood further, however, that not only does the zigzag (aka staggered seam) layup configuration facilitate tapering where such is advantageous or desirable during use of the various bi-angle, thin ply laminate structures described herein, but it also further enhances certain material characteristics of the laminate structures themselves. As a non- limiting example, with reference back to Figure 7, the uniaxial tensile strength of C-Ply^{®} at 0° and 22.5° alike shows improvement, as compared to the same laminate structure "with seams" - the cap of the latter being represented by the solid horizontal line entitled the same. For C-Ply^{®} at 22.5° uniaxial tensile strength may improve from roughly 500MPa with existing (e.g., unstaggered) seams, to roughly 590 MPa with staggered, or zigzagged seams. Such is due, at least in part to the further dispersing of potentially weak points (e.g., the seams themselves) across the entirety of the composite laminate structures according to various embodiments described herein.

### Pliable Structural Characteristics

Beyond the structural and material characteristics previously described herein with respect to the various bi-angle, thin-ply laminate structure according to various embodiments, certain embodiments thereof exhibit additional desirable structural characteristics, particular with respect to a "pliable" nature exhibited thereby. Such embodiments are described in further detail below. It should be understood, however, that the various embodiments described exhibit at least those structural and material characteristics as described previously herein, except to the extent such is noted otherwise. Thus, for purposes of brevity, where substantially similar structural and/or material characteristics exist between the general bi-angle thin-ply laminate structures and those further exhibiting pliable material characteristics, such is not reproduced verbatim herein- below. That should not, however, be construed in such a fashion so as to limit the structure, characteristics, advantages, or the like of the pliable laminate structures themselves. a. Exemplary Configurations

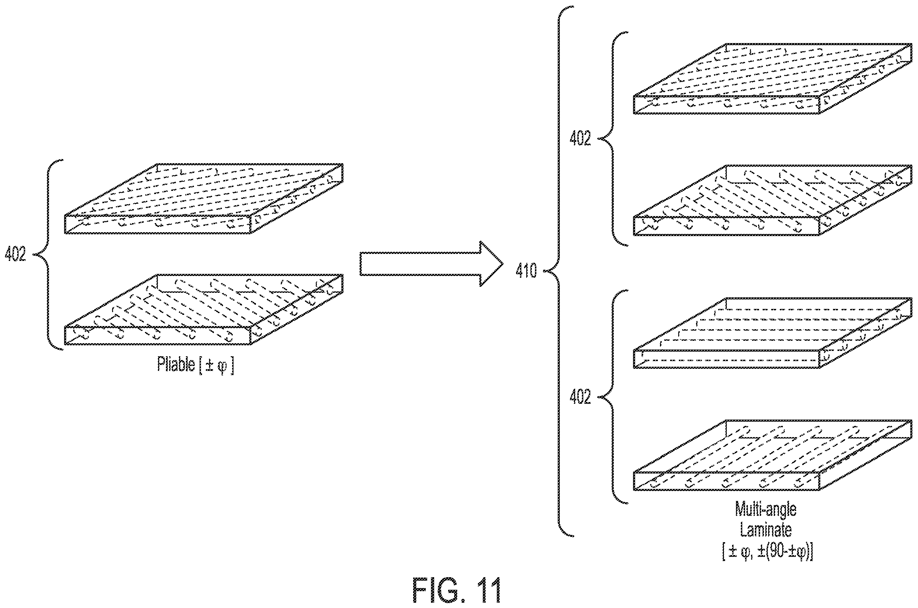

Turning now to Figure 11 with particular emphasis, an exemplary embodiment of a bi-angle, thin-ply, pliable laminate construction is illustrated, as such may be formed via one or more sub-laminate modules 402. As may be seen, each sub-laminate module 402 comprises two discrete ply layers, each oriented relative to one another at a ply angle 2ϕ, thus forming the desired bi-angle configuration at [±cp]. Generally speaking, the ply angle ϕ may be any acute angle, although according to various embodiments, the ply angle is equal to or less than 45°. A particularly exemplary configuration, with reference further to Figure 12, incorporates a ply angle ϕ of 22.5°. Still further configurations may be envisioned, including the non- limiting examples of 20°, 25°, 30°, and even 15°, although it has been generally observed that for particular applications, as will be described elsewhere herein, the ply angle ϕ of 22.5°, when configured as a [±22.5°] laminate structure provides one or more specifically desirable material characteristics.

Any of a variety of ply angles across the range of 0°< ϕ <45° may be used, depending upon the particularly desired material characteristics, as have been at least in part previously described herein and as will be expanded upon in further detail below. However, it should be understood that, in contrast with the various bi-angle, thin ply laminate structures 110 described previously herein, the pliable laminate structures, whether in the context of sub-laminate modules 402 or the "block-built" laminate structures 410 in their entirety, generally dispense with any ply layers oriented in the unidirectional (i.e., 0°) direction. As will be described in further detail below, the removal of such 0°, and in certain embodiments corresponding 90° ply angles contributes at least in part to the enhanced pliability of the tapes formed from the laminate structures 410.

Returning to Figure 11, it should be understood that according to various embodiments, the sub-laminate modules 402 may be manipulated (e.g., via a layup/winding process, as previously described) to form various overall laminate structures 410. Notably, at least the illustrated laminate structure 410 of Figure 11 may be formed via a two-axis layup process, namely by laying (or winding, where tape is involved) the sub-laminate module 402 first as illustrated, then by laying (or winding) the sub-laminate module in a rotated orientation, as denoted by the two lower illustrated layers in the right-hand illustration of Figure 11. In other embodiments a single sub-laminate module 402 may be folded upon itself (e.g., in half), thereby enabling formation of the illustrated laminate structure 410 via a one-axis layup procedure, as has been described elsewhere herein. Turning now to Figure 12, however, according to various embodiments mere rotating and/or folding of sub-laminate modules 410 may not be sufficient, in and of itself, to acquire laminate structures exhibiting material characteristics (e.g., strength, stiffness, pliability, and the like) comparable to that of conventional metal-based laminate structures, as commonly known and used in the art. In these and other embodiments, sequential spiral stacking of the sub-laminate modules 410 may also be required, such that by incrementally rotating the angle of orientation of the ply layers therein, in discrete increments about a 360° arc. As a non-limiting example, Figure 12 illustrates a desirable [π/4] laminate structure 420 that may be formed via this process.

Particularly, as may be understood from Figure 12, the illustrated [π/4] laminate structure 420 may be formed according to various embodiments from four total plies, or two bi-angle laminate sub-modules 402 (see also Figure 11) rotated at differing orientations relative to one another. During the spiral stacking procedure, respective sub- modules may be laid, according to certain embodiments, in an incremental fashion at [±22.5°] and [±67.5°] orientations, although each individual sub-module is at least initially formed from the same [±22.5°] basic structure. Thus, a two-axis [π/4] layup procedure would involve two sub-laminate structures 402, each rotated relative to one another by 45° (i.e., twice the orientation angle of 22.5°), such that the formed laminate structure 420, in its entirety comprises substantially equally spaced ply layer across a totality of 360°. Amongst other structural characteristics, such configurations provide improved compressive strength, anti-penetration capabilities, quasi-isotropic features, homogeneity, and seamless tapering capabilities, all as previously described herein and as not conventionally achievable with a laminate of such minimal thickness/weight and layup sequences.

As a non- limiting example of the improved material characteristics provided by the pliable laminate structures 410, 420, it should be generally understood that with a thin ply configuration incorporating sub-laminate modules 402 having thicknesses of approximately 0.125 millimeters (e.g., for bi-angle laminates, ply layer thicknesses of 0.0625 millimeters), such pliable structures may achieve quasi-isotropic characteristics with an exemplary total laminate thickness on the order of 0.25 millimeters. In other embodiments, the total laminate thicknesses, as have been described elsewhere herein, will be generally less than one millimeter, although in still other embodiments, the total laminate thickness may vary up to at least two millimeters. It should be understood, however, that the total laminate thickness of various embodiments, as described elsewhere herein, is generally substantially less than that for conventional unidirectional "standard ply" laminate structures, b. Pliability & Scissoring

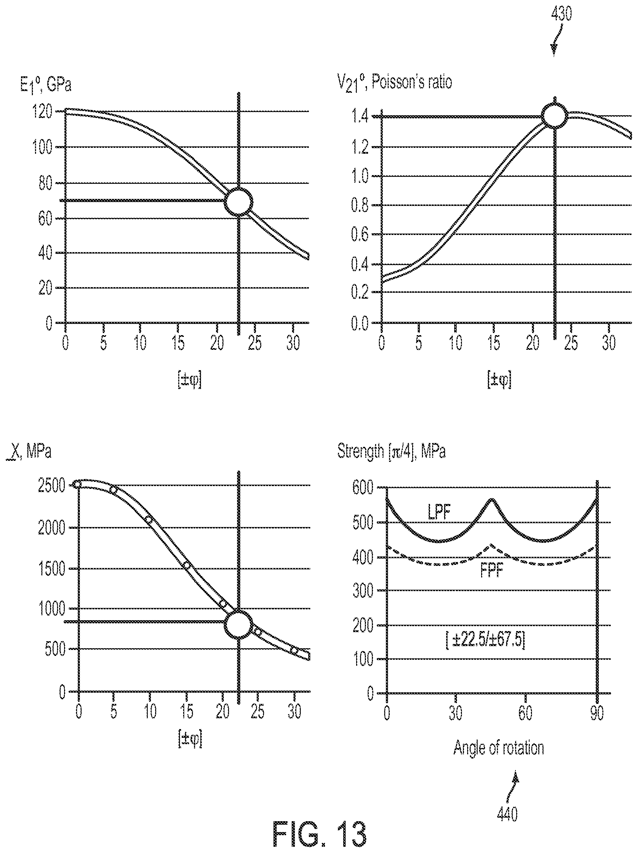

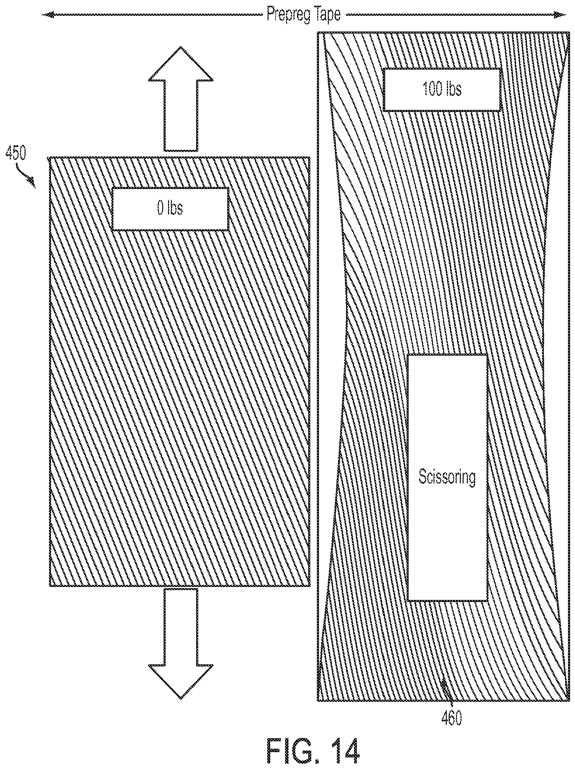

Turning now to Figures 13 and 14, various material characteristics of the pliable [±22.5 °] laminate structures described herein according to various embodiments are illustrated. It should be understood generally that the data illustrated in these figures is theoretically-based upon mathematical studies and analysis; as such, no actual data results, from tests or otherwise, are incorporated therein.

With that context, as illustrated in the upper left-hand chart of Figure 13, at the pliable [±22.5 °] orientation, the coefficient of stiffness (E) of a cured bi-angle thin-ply pliable laminate structures is approximately 70 GPa, comparable to that for conventional aluminum configurations, but with, as previously described herein, much thinner and lightweight laminates. Noticeably, as the ply angle increases beyond [±22.5°], the coefficient of stiffness (E) further decreases, illustrating at least in part the desirable stiffness characteristics obtainable via various embodiments described herein as such angle becomes ever-increasingly shallow.

With reference now to the lower right-hand chart of Figure 13, it may be seen that as the ply angle orientation (here denoted generally as "angle of rotation") varies during rotation of a [π/4] laminate structure according to the various stacking techniques described elsewhere herein (e.g., a [π/4] laminate structure formed by [±22.5°] and rotated [±67.5°] sub-laminate modules), the strength 440 thereof, as measured in MPa, remains substantially uniform there-across. Indeed, it was generally observed that first-ply-failure (FPF) occurred at approximately 400 MPa, with last-ply-failure (LPF) occurring at approximately 500 MPa. In this manner, as previously described herein, this chart of Figure 13 further demonstrates the quasi-isotropic characteristics achievable via rotation of the [±22.5°] laminate structures described herein across a 360° arc {see also Figure 12).

Turning now to the upper right-hand chart of Figure 13, various values for the Poisson's ratio (v) 430 for a cured [π/4] laminate structure formed according to the various stacking techniques described elsewhere herein (e.g., from a [±22.5°] sub-laminate structure) are illustrated. In certain embodiments, as may be seen from this chart, the Poisson's ratio (v) 430 exceeds unity for angles ranging from approximately 15° to at least 30°. Maximized Poisson's ratio (v) 430 according to various embodiments, upon curing, occurs at approximately 22.5°, with a value of 1.4. Generally speaking, as is commonly known and understood in the art, Poisson's ratio (v) is the negative ratio of transverse to axial strain. In fact, when a sample material is stretched or extended, it generally tends to contract in those directions transverse to the direction of stretching. When Poisson's ratio 430 exceeds unity, thus, the degree of contraction exceeds that of extension. The result of this is "scissoring," as illustrated further in Figure 13. Poisson's ratio's (v) near, but not exceeding unity, may also in certain embodiment result in a degree of "scissoring" as well, for example where the tapes described elsewhere herein are in prepreg form (i.e., prior to the curing thereof).

With particular reference to Figure 14, illustrated is an exemplary prepreg (i.e., uncured) laminate tape having a [±22.5 °] ply orientation incorporated therein, in an unstrained configuration 450 and a strained configuration 460. As evident, according to various embodiments, when in the unstrained configuration 450, the tape exhibits neither expansion nor compression. However, when in the strained configuration 460, because the Poisson's ratio (v) 430 of the tape, at least once cured, exceeds unity, scissoring occurs as the observed compression of the tape exceeds the degree of extension observed. It should be understood that scissoring may also occur with relatively high Poisson's ratio (v) values, even where such are less than, but nearing unity. Compression in excess of extension further contributes to the pliability of the laminate structure during use. Indeed, various practical advantages of such, including the capability of conforming laminate tapes to complex curvatures without sacrificing performance and strength values, will be described in further detail below and with reference to at least Figures 14-18. As a non- limiting general example, it should be understood that the pliable nature of the laminate structure, particularly when in tape form, enables wrapping of cylindrical structures, including complex portions thereof (e.g., rounded ends or otherwise) without wrinkling and/or buckling of the tapes, at least the latter of which is generally known and understood to adversely impact strength and performance characteristics.

Before turning to further description of various practical applications of the pliable laminate structures described herein, in certain embodiments, it should also be understood that the pliable nature thereof may be provided not only from the structural characteristics associated with Poisson's ratio, but also from the manner in which the ply layers contained therein are stitched relative to one another. As previously described herein, in certain embodiments, the described laminate structures (and the sub-laminate modules thereof) may be formed from a NCF process, which incorporates either a transverse stitching or a bonding process so as to position and maintain the plies of respective ply layers relative to one another, upon layup thereof. In certain of the pliable tape embodiments described herein, however, the stitching may be such that a degree of additional flexibility is provided within the laminate structure itself, beyond the pliability afforded via the scissoring characteristics described above.

### Exemplary Constructions & Applications

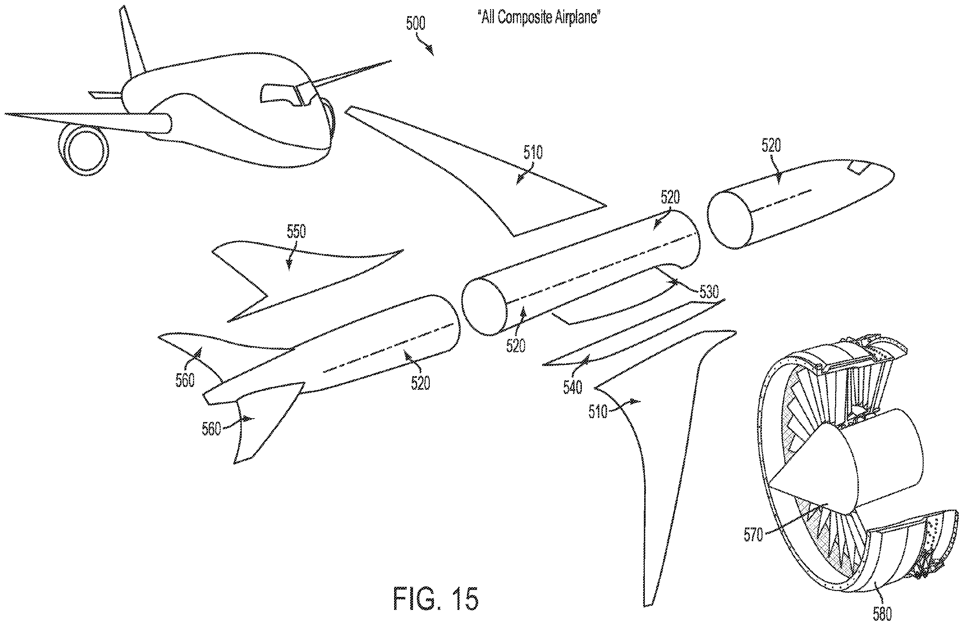

Turning now to Figure 15, an exemplary application of the pliable laminate structures described herein according to various embodiments is illustrated. As may be seen, a composite airplane 500 is envisioned, wherein the external surfaces are formed to a certain degree from the exemplary pliable laminate structures. Indeed, when in tape form, the pliable laminate may be wrapped via an automated tape laying (ATL) process, as also described previously herein, so as to cover surfaces of wings 510, a fuselage 520, a central wing portion 530-540, a vertical fin 550, and horizontal stabilizer 560 surfaces.

Via exemplary ATL processes, such as that illustrated in at least Figure 16, it may be deduced that the ATL machine 610 may first wind in a downward direct relative to the cylinder 600 (e.g., an airplane fuselage 520 of Figure 15), followed by a winding in an upward relative direction - thus resulting in varying orientations of ply angles 620. Such a process could be implemented with the non-limiting examples of applications involving wrapping a [0/30°] sub-laminate module into a [π/6] quasi-isotropic laminate structure by sequential rotation to [60/90°] and [-60/-300 ] orientations with each wrap passing (see Figure 4A) and/or wrapping a [±22.5 °] sub-laminate module into a [π/4] quasi-isotropic laminate structure by sequential rotation to a [±67.5 °] orientation with each wrap passing (see Figure 12), all of which as have been described previously herein. It should be understood that in this manner, an external surface may be provided that is not only substantially uniform, but also lightweight and exhibiting quasi-isotropic and/or scissoring characteristics, as also described previously herein.

With continued reference to Figure 15, another exemplary application of the pliable and other laminate tapes described herein lies in the formation of containment ring structures 580 on aircraft engines 570. Conventionally, due to containment concerns in the event an engine rotor or blade were to be damaged or otherwise become a loose projectile, portions of the engine covers were formed from extremely thick and strong (but heavy) material constructions. In this manner, such would contain any such flying blades or projectiles, tending to the containment ring nomenclature. According to various embodiments, due to the manner in which the various structural tapes described herein provide material characteristics comparable to conventional high strength and stiffness composites, such may be incorporated for use in the containment ring context.

As a non- limiting example, the tape may simply be applied thicker in the containment portion, relative to the thickness of application elsewhere on the aircraft or engine, to whatever degree deemed sufficient to provide the necessary containment properties.

With reference now to Figure 17, certain exemplary characteristics of the pliable laminate structures incorporating [±22.5°] sub-laminate modules, whether in an exemplary [π/4] quasi-isotropic laminate structure or otherwise, should be understood. As a non- limiting example, due at least in part to the pliable nature of such laminate structures, helical angles for wrapping, when in tape form, may be incrementally changed. Such permits the pliable tape to conform to complex curvatures without sacrificing performance and/or strength values, namely by substantially reducing and/or eliminating the possibility of buckling (e.g., wrinkling) of the tape itself. As a result, cylindrical structures may have portions thereof containing complex curvatures seamlessly wrapped with various embodiments of the composite tape structures described herein.

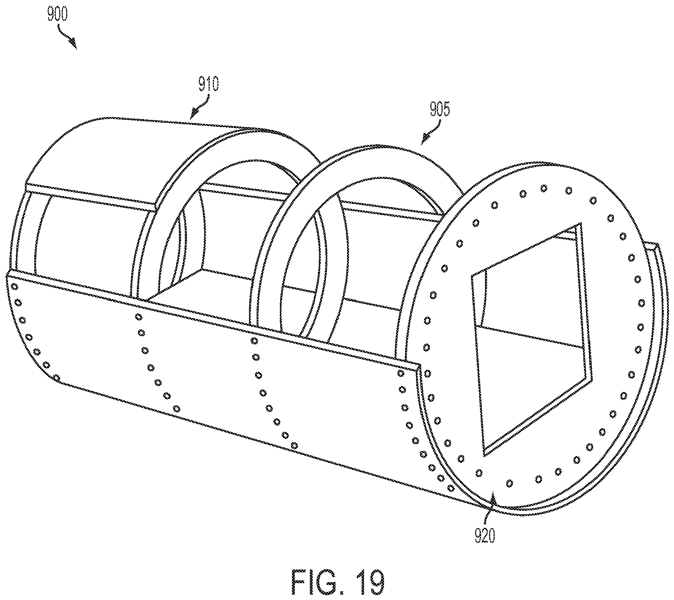

Cylindrical structures containing complex curvatures may even include bulkheads on aircraft, as may be understood with combined reference to Figures 17 and 19. With reference to Figure 19 in particular, a more conventionally constructed fuselage skin and bulkhead surface application 900 is illustrated, wherein a fuselage skin 910 may be overlaid over a plurality of forming members 905, with a separately constructed bulkhead 920 being affixed (e.g., riveted, bolted, or the like) thereto at one or both ends thereof. Generally speaking, it should be understood that given the relative orientations of the fuselage skin and the bulkhead surfaces (e.g., substantially perpendicular relative to one another), such have conventionally been necessarily formed from two or more pieces. In contrast, using the laminate structures described herein, whether via an all hoop layup or continuous winding configuration, as described previously, or otherwise, the fuselage and bulkhead may be formed as an integrated structure, analogous to the pressure vessel of Figure 17. In such configurations, a one-axis layup process may be provided, whereby the laminate tape is continuously wound along the length of the fuselage and bulkhead (e.g., from one end thereof to the other). Analogous one- axis layups may also be provided on planar surfaces as well. Indeed, returning to Figure 17, absent the pliable laminate structures incorporating [±22.5 °] sub-laminate modules, whether in an exemplary [π/4] quasi-isotropic laminate structure or otherwise, as described elsewhere herein, potentially unnecessary weak points are introduced in the context of complex curvatures, whether in the context of cylindrical structures illustrated in this figure or for aircraft bulkhead structures or for any pressured vessel.

For bulkheads in particular, weakness are typically inherently due to the requirement that such bulkheads be constructed from two or more separate pieces, thereby facilitating the wrapping thereof with conventional unidirectional laminate tapes in such a fashion so as to preserve the strength and performance characteristics thereof. Indeed, attempting to wrap conventional laminate tapes around complex three-dimensional curvatures is commonly known and understood to adversely impact the performance thereof, whether via tape buckling or otherwise. Thus, a significant improvement provided by various embodiments of the pliable laminate structures described herein is the ability to more safely and secure maintain pressurized cabins in the aircraft context by the substantial reduction and/or elimination of seams of flanges, which may be susceptible to rupture.

It should be understood, however that beyond the aircraft industry, the ability to provide more complex and integrated structures may have any of a variety of applications, including in the context of rocket skins, automobile parts, and wind turbine blade surfaces. Still further applications exist in the context of providing inserts and patches, whether for surfaces or structures needing reinforcement or repair, regardless of the industrial context. As a non-limiting example, where reinforcement may be desirable, additional tape windings may be incorporated so as to enhance material characteristics to a degree necessary. The benefits of being able to stack more sublaminate modules according to embodiments of the invention in selected places without concern for symmetry are conversely similar to those in the tapering context discussed above.

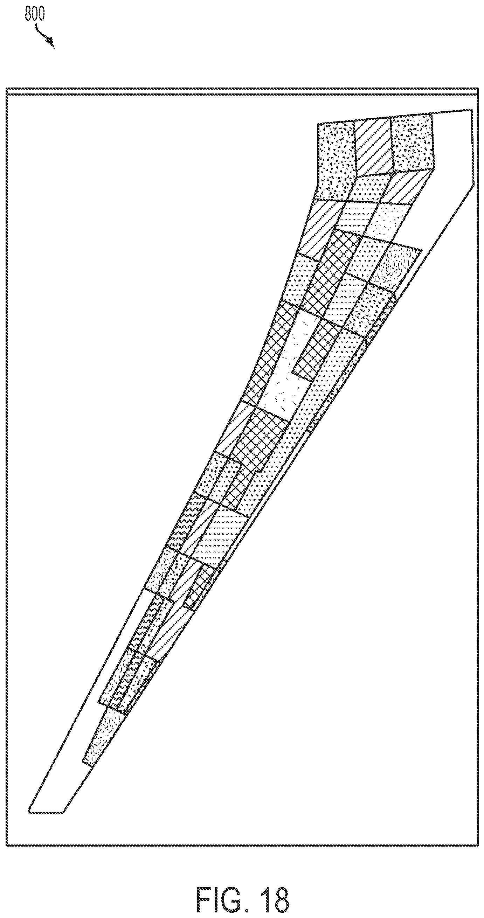

Another non-limiting example where damage occurs and/or repair is necessary, tape windings may be applied thereto so as to return material characteristics to those in existence prior to the occurrence of the damage. Such may be particularly beneficial in the context of aircraft fuselage or wing structures, where such may be damaged and/or simply worn down over time due to use, such that repair and/or refurbishment thereof becomes desirable. With continued reference to applications of the pliable laminate structures incorporating [±22.5°] sub-laminate modules, whether in an exemplary [π/4] quasi- isotropic laminate structure or otherwise, as described elsewhere herein, Figure 18 illustrates an exemplary wing surface application. Analogous applications may exist in the wind turbine blade and other comparable areas of technology in which the material characteristics of external surfaces is of important to the performance and design thereof. Turning to Figure 18 in particular, illustrated therein is an illustration of a "bay-to-bay" laminate wrapping of an aircraft wing, in which the material characteristics of the laminate structure placed upon each distinct "bay" is uniquely and separately determined based at least in part upon the anticipated loads encountered by the same during use. Thus, costs are minimized but, for example, not unnecessarily coating a wing surface with relatively stronger laminate nearer the wing tips, where it is generally known and understood that lower loads occur. One drawback of conventional "bay-to-bay" laminate wing designs arises in the context of material discontinuities that exist between each bay, which like the bulkhead seams described previously herein, introduces potential areas of concern for failure.

Incorporating various embodiments of the pliable laminate structures incorporating [+22.5°] sub-laminate modules, whether in an exemplary [π/4] quasi-isotropic laminate structure or otherwise, as described elsewhere herein, the above-described deficiencies of "bay-by-bay" wing (or blade) surface construction may be avoided. In particular, the thickness of the laminate structure may continually varied along the length of the wing 800 (see Figure 18), such that it is necessarily thicker at a point nearer the fuselage than at a tip thereof, thus accommodating the variable loads imposed thereon with minimal time and/or effort. Indeed, simply applying an additional layup (e.g., via an ATL machine process) may suffice, with further additional layups being added, as necessary, dependent upon strength and performance models and design criteria. Ribs between conventional "bays" may also be integrally formed from the pliable laminate structures described herein (and even those that are substantially non-pliable in nature) simply by varying the laminate stacking thickness at and adjacent rib locations. Integrated ribs, much like integrated bulkheads, reduce the number of seams, thus reducing the likelihood of associated failure, which in turn improves the reliability of various material strength and performance characteristics of the laminate structures themselves. In certain embodiments, the varying thicknesses may be achieved via tapering processes, as described elsewhere herein, although other procedures may be employed, provided the laid laminate structure remains substantially continuous in its fully fabricated form surrounding the wing or blade. In these and other embodiments, it should be understood not only that the pliable and/or not-pliable variations of the laminate structures described herein may be used for fabrication of a wing or blade surface in the continuous (e.g., non-bay -by-bay) fashion described above, but also that various combinations thereof may be incorporated, as may be desirable for various applications. As a non-limiting example, pliable laminate structures may be used to cover complex angular surface portions of leading and trailing edges of the wing or blade, whereas less- or non-pliable laminate structures (although still bi-angle and thin-ply in construction) may be utilized for wrapping of relatively less complex surface orientations. Despite highly complex wing design, the application of the basic concept of one-axis layup of various bi-angle or triangle tape configurations, as have been described elsewhere herein, has multiple advantages, including that significant savings in weight and cost are possible, as compared to conventional tape configurations. Still further, the various configurations of tape described herein may be applied to skins, spars, stringers, stiffeners, and a variety of structural elements, where conventional tape laying may not be feasible due to, for example, the lack of flexibility inherent therein.

Beyond the aircraft, wind turbine, automotive, and rocket applications described above, it should further be understood that the various embodiments of laminate structures described elsewhere herein may be utilized in any of a variety of "heavy load connection" contexts. Such is desirable given the ability of the shallow angle configurations' ability to offer not only suppressed micro-cracking and superior strength, but also its ability to match the stiffness of titanium when in use. Indeed, as a non-limiting example, a [π/4] C-Ply^{®} panel with orientations at [0/+20/0] will have the same longitudinal Young's modulus as that of titanium, at 110 Gpa. Because titanium is conventionally used to transfer loads from traditional laminate structures at connection points between wings and fuselages, horizontal tails to pivots thereof, and helicopter rotor blades to hubs thereof, substitution thereof with the much more cost-efficient and pliable laminate structures described herein is oftentimes desirable. Still further, with closely matched Young's modulus to that of titanium, bonded as well as bolted joints (e.g., seams) will be stronger from less residual stress and more compatible properties across the intersection thereof. Such is advantageous again, particularly where substantial reduction and/or elimination of seams may not be entirely feasible, providing yet another instance in which the various laminate structures described herein promote lower cost composite materials with comparable and/or better connectivity strength and performance characteristics than those of titanium. Such is further true according to certain embodiments incorporating laminate structures such as those described herein in tapered edge and/or corner surfaces.

## Claims

1. A bi-angle pliable tape for use in forming a composite laminate structure, the bi-angle pliable tape consisting of:
a longitudinal axis extending in a unidirectional machine direction and corresponding to a primary axis of the bi-angle pliable tape;
a first ply comprising fibers extending in a first orientation, the first orientation being offset relative to the longitudinal axis at a first angle of less than 30°; and
a second ply comprising fibers extending in a second orientation, the second orientation being opposite to the first orientation relative to the unidirectional machine direction and the primary axis of the bi-angle pliable tape,
wherein the first ply and the second ply are secured substantially adjacently relative to one another by one or more yarns so as to provide a non-crimped configuration such that the bi-angle tape defines a pliable structure, the one or more yarns being oriented substantially in a transverse direction relative to the primary axis of the bi-angle pliable tape, the pliable structure being configured to permit relative movement of the first and second plies relative to one another upon subjection to a load or force capable of introducing scissoring into the configuration.

2. The bi-angle pliable tape of Claim 1, wherein the first angle is in a range from 15° to 25°.

3. The bi-angle pliable tape of Claim 1, wherein the first angle is approximately 22.5°.

4. The bi-angle pliable tape of Claim 1, wherein the tape has a Poisson' s ratio greater than unity for the tape in its cured form so that the tape is relatively pliable so as to provide a uniformly smooth adherence to surfaces incorporating complex curvatures.

5. The bi-angle pliable tape of Claim 4, wherein the Poisson' s ratio is approximately 1.4.

6. The bi-angle pliable tape of Claim 1, wherein a thickness of each ply therein is 0.125 millimeters or less.

7. The bi- angle pliable tape of Claim 1, wherein the fibers of the first and the second ply of comprise a plurality of spread tows lying adjacent to each other.

8. A quasi-isotropic composite laminate structure, said structure comprising:
at least three bi-angle tapes according to any one of claims Ito 7, each tape comprising:
a first ply layer comprising fibers extending in a first orientation; and a second ply layer comprising fibers extending in a second orientation, the second orientation being offset relative to the first orientation; and
wherein each of the at least three tapes of the composite laminate structure are rotationally oriented relative to one another such that corresponding ply layers are substantially uniformly distributed across a 360° angle at an incremental angle of less than or equal to 30°

9. The composite laminate structure of Claim 8, wherein the incremental angle is approximately 30° so as to define a [π/6] composite laminate structure.

10. The composite laminate structure of Claim 8, wherein:
each tape comprises a longitudinal axis extending in a unidirectional machine direction;
the first orientation of the first ply layer is offset relative to the longitudinal axis at a first angle of less than 30°; and
the second orientation of the second ply layer is opposite the first orientation relative to the unidirectional machine direction.

11. The composite laminate structure of Claim 10, wherein the incremental angle is approximately 22.5° so as to define a [π/8] composite laminate structure.

12. The composite laminate structure of Claim 8, wherein:
the first orientation of the first ply layer of each tape is offset relative to a longitudinal axis of the respective tape at a first angle; and
the second orientation of the second ply layer of each tape is offset relative to the longitudinal axis at a second angle, the second angle being opposite the first angle relative to the longitudinal axis such that each tape forms a balanced configuration.

13. The composite laminate structure of Claim 8, wherein each tape has a Poisson's ratio is greater than unity for each tape in a cured form so that the tape is relatively pliable so as to provide a uniformly smooth adherence to surfaces incorporating complex curvatures.

14. The composite laminate structure of Claim 13, wherein the Poisson's ratio is approximately 1.4.

15. The composite laminate structure of Claim 8, wherein:
each of the tapes is further secured substantially adjacently relative to one another via one or more yarns so as to provide a non-crimped configuration; and
the one or more yarns are further configured to permit each of the tapes to flex relative to one another when the tape is subjected to a load.

16. A composite laminate integrated bulkhead, said bulkhead being formed from an integrated piece of material and being formed either by the quasi-isotropic composite laminate structure of Claim 8 or by a plurality of the bi-angle pliable tapes of Claim 1.

17. A containment ring formed either from the quasi-isotropic composite laminate structure of Claim 8 or from a plurality of the bi-angle pliable tapes of Claim 1.

## Patentansprüche

1. Ein zweiwinkliges, flexibles Band, zur Verwendung bei der Bildung einer Composite - Laminatstruktur, dabei besteht das zweiwinklige flexible Band aus:
einer Längsachse, die sich in einer unidirektionalen Maschinenrichtung erstreckt und die einer Primärachse des zweiwinkligen, flexiblen Bandes entspricht;
einer ersten Lage, die Fasern erhält, die in einer ersten Ausrichtung verlaufen, diese erste Ausrichtung ist relativ zu dieser Längsachse in einem ersten Winkel von weniger als 30° versetzt; und
eine zweite Lage die Fasern erhält, die in einer zweiten Ausrichtung verlaufen, diese zweite Ausrichtung verläuft gegenüber der ersten Ausrichtung relativ zur unidirektionalen Maschinenrichtung und der ersten Achse des zweiwinkligen flexiblen Bandes,
wobei die erste Lage und die zweite Lage im Wesentlichen relativ zueinander nebeneinander über einen oder mehrere Garnfäden fest verbunden sind, um so eine nicht gekräuselte Konfiguration zu bilden, so dass das zweiwinklige Band eine flexible Struktur definiert, der Garnfaden oder die Garnfäden sind im Wesentlichen in einer Richtung quer zur primären Achse des zweiwinkligen flexiblen Bandes ausgerichtet, die flexible Struktur ist dazu konfiguriert, eine relative Bewegung der ersten und zweiten Lage relativ zueinander zu erlauben, wenn eine Last oder Kraft ausgeübt wird, die in der Lage ist, Scherkräfte in die Konfiguration einzubringen.

2. Zweiwinkliges, flexibles Band nach Anspruch 1, wobei der erste Winkel in einem Bereich zwischen 15° und 25° liegt.

3. Zweiwinkliges, flexibles Band nach Anspruch 1, wobei der erste Winkel ungefähr 22.5° beträgt.

4. Zweiwinkliges, flexibles Band nach Anspruch 1, wobei das Band eine Poisson - Verteilung größer als die Einheit für das Band in seiner gehärteten Form hat, so dass das Band relativ flexibel ist und so ein gleichmäßig glattes Haftvermögen an Flächen, die komplexe Krümmungen aufweisen, bietet.

5. Zweiwinkliges, flexibles Band nach Anspruch 4, wobei die Poisson - Verteilung ungefähr 1,4 beträgt.

6. Zweiwinkliges, flexibles Band nach Anspruch 1, wobei die Dicke jeder darin enthaltenen Lage 0.125 Millimeter oder weniger beträgt.

7. Zweiwinkliges, flexibles Band nach Anspruch 1, wobei die Fasern der ersten und zweiten Lage eine Vielzahl ausgebreiteter Fäden enthält, die nebeneinander liegen.

8. Ein quasi-isotropes Verbundlaminat, wobei diese Struktur umfasst:
mindestens drei zweiwinkliges Bänder nach irgendeinem der Ansprüche 1 bis 7, jedes Band enthält eine erste Lageschicht mit Fasern, die in eine erste Ausrichtung verlaufen, und eine zweite Lageschicht, die in eine zweite Ausrichtung verlaufen, die zweite Ausrichtung ist relative zur ersten Ausrichtung versetzt; und
wobei jedes der mindestens drei Bänder der Composite - Laminatstruktur in Drehrichtung relativ zueinander ausgerichtet sind, so dass einander entsprechende Lageschichten im Wesentlichen gleichmäßig über einen 360° Winkel verteilt sind, mit einem inkrementalen Winkel von kleiner oder gleich 30°.

9. Die Composite - Laminatstruktur nach Anspruch 8, wobei der inkrementale Winkel ungefähr 30° beträgt und so eine [π/6] Composite - Laminatstruktur definiert.

10. Die Composite - Laminatstruktur nach Anspruch 8, wobei:
jedes Band eine Längsachse hat, die in einer unidirektionalen Maschinenrichtung verläuft; die erste Ausrichtung der ersten Lageschicht ist relativ zu dieser Längsachse in einem ersten Winkel von weniger als 30° versetzt; und
die zweite Ausrichtung der zweiten Lageschicht verläuft gegenüber der ersten Ausrichtung relativ zur unidirektionalen Maschinenrichtung.

11. Die Composite - Laminatstruktur nach Anspruch 10, wobei der inkrementale Winkel ungefähr 22,5° beträgt und so eine [π/8] Composite - Laminatstruktur definiert.

12. Die Composite - Laminatstruktur nach Anspruch 8, wobei:
die erste Ausrichtung der ersten Lageschicht jedes Bandes ist relativ zur Längsachse des jeweiligen Bandes um einen ersten Winkel versetzt; und
die zweite Ausrichtung der zweite Lageschicht jedes Bandes ist relativ zur Längsachse um einen zweiten Winkel versetzt, der zweite Winkel liegt gegenüber dem ersten Winkel relativ zur Längsachse, so dass jedes Band eine ausgewogene Konfiguration bildet.

13. Die Composite - Laminatstruktur nach Anspruch 8, wobei jedes Band eine Poisson - Verteilung größer als die Einheit für das Band in seiner gehärteten Form hat, so dass das Band relativ flexibel ist und so ein gleichmäßig glattes Haftvermögen an Flächen, die komplexe Krümmungen aufweisen, bietet.

14. Die Composite - Laminatstruktur nach Anspruch 13, wobei die Poisson - Verteilung ungefähr 1.4 beträgt.

15. Die Composite - Laminatstruktur nach Anspruch 8, wobei:
jedes der Bänder außerdem im Wesentlichen relativ zueinander nebeneinander über einen oder mehrere Garnfäden fest verbunden ist, um so eine nicht gekräuselte Konfiguration zu bilden, und
der eine Garnfaden oder die Garnfäden weiterhin dazu konfiguriert sind zu erlauben, dass sich die Bänder relativ zueinander bewegen, wenn das Band einer Last ausgesetzt ist.

16. Ein Schott mit integriertem Composite-Laminat, dieses Schott wird aus einem integrierten Materialteil geformt und wird entweder aus der quasi-isotropischen Composite- Laminatstruktur nach Anspruch 8 oder aus einer Vielzahl der zweiwinkligen, flexiblen Bänder nach Anspruch 1 gebildet.

17. Ein Sicherheitsring, geformt entweder aus der quasi-isotropischen Composite-Laminatstruktur nach Anspruch 8 oder aus einer Vielzahl der zweiwinkligen, flexiblen Bänder nach Anspruch 1.

## Revendications

1. Bande pliable bi-angulaire à utiliser dans la formation d'une structure stratifiée composite, la bande pliable bi-angulaire consistant en :
un axe longitudinal s'étendant dans une direction de machine unidirectionnelle et correspondant à un axe primaire de la bande pliable bi-angulaire ;
un premier pli comprenant des fibres s'étendant dans une première orientation, la première orientation étant décalée par rapport à l'axe longitudinal d'un premier angle inférieur à 30 ; et
un second pli comprenant des fibres s'étendant dans une seconde orientation, la seconde orientation étant opposée à la première orientation par rapport la direction de machine unidirectionnelle et à l'axe primaire de la bande pliable bi-angulaire,
dans laquelle le premier pli et le second pli sont fixés de manière sensiblement adjacente l'un par rapport à l'autre par un ou plusieurs fils de manière à fournir une configuration non sertie telle que la bande bi-angulaire définit une structure pliable, les un ou plusieurs fils étant orientés sensiblement dans une direction transversale par rapport à l'axe primaire de la bande pliable bi-angulaire, la structure pliable étant configurée pour permettre un déplacement relatif des premier et second plis l'un par rapport à l'autre lors d'une soumission à une charge ou une force capable d'introduire un effet de ciseau dans la configuration.

2. Bande pliable bi-angulaire selon la revendication 1, dans laquelle le premier angle est dans une plage de 15° à 25°.

3. Bande pliable bi-angulaire selon la revendication 1, dans laquelle le premier angle est d'approximativement 22,5°.

4. Bande pliable bi-angulaire selon la revendication 1, dans laquelle la bande présente un rapport de Poisson supérieur à l'unité pour la bande dans sa forme durcie de sorte que la bande est relativement pliable de manière à fournir une adhérence uniformément lisse à des surfaces incorporant des courbures complexes.

5. Bande pliable bi-angulaire selon la revendication 4, dans laquelle le rapport de Poisson est d'approximativement 1,4.

6. Bande pliable bi-angulaire selon la revendication 1, dans laquelle une épaisseur de chaque pli en son sein est de 0,125 millimètre ou moins.

7. Bande pliable bi-angulaire selon la revendication 1, dans laquelle les fibres des premier et second plis comprennent une pluralité de mèches étalées mutuellement adjacentes.

8. Structure stratifiée composite quasi-isotrope, ladite structure comprenant :
au moins trois bandes bi-angulaires selon l'une quelconque des revendications 1 à 7, chaque bande comprenant :
une première couche de pli comprenant des fibres s'étendant dans une première orientation ; et une seconde couche de pli comprenant des fibres s'étendant dans une seconde orientation, la seconde orientation étant décalée par rapport à la première orientation ; et
dans laquelle les au moins trois bandes de la structure stratifiée composite sont orientées chacune de manière rotative les unes par rapport aux autres de telle sorte que les couches de pli correspondantes sont réparties sensiblement uniformément sur un angle de 360° à un angle incrémentiel inférieur ou égal à 30°.

9. Structure stratifiée composite selon la revendication 8, dans laquelle l'angle incrémentiel est d'environ 30° de manière à définir une structure stratifiée composite [π/6].

10. Structure stratifiée composite selon la revendication 8, dans laquelle :
chaque bande comprend un axe longitudinal s'étendant dans une direction de machine unidirectionnelle ;
la première orientation de la première couche de pli est décalée par rapport à l'axe longitudinal d'un premier angle inférieur à 30 ; et
la seconde orientation de la seconde couche de pli est opposée à la première orientation par rapport la direction de machine unidirectionnelle.

11. Structure stratifiée composite selon la revendication 10, dans laquelle l'angle incrémentiel est d'approximativement 22,5° de manière à définir une structure stratifiée composite [π/8].

12. Structure stratifiée composite selon la revendication 8, dans laquelle :
la première orientation de la première couche de pli de chaque bande est décalée d'un premier angle par rapport à un axe longitudinal de la bande respective ; et
la seconde orientation de la seconde couche de pli de chaque bande est décalée d'un second angle par rapport à l'axe longitudinal, le second angle étant opposé au premier angle par rapport à l'axe longitudinal de sorte que chaque bande forme une configuration équilibrée.

13. Bande pliable bi-angulaire selon la revendication 8, dans laquelle la bande présente un rapport de Poisson supérieur à l'unité pour la bande dans sa forme durcie de sorte que la bande est relativement pliable de manière à fournir une adhérence uniformément lisse à des surfaces incorporant des courbures complexes.

14. Bande pliable bi-angulaire selon la revendication 13, dans laquelle le rapport de Poisson est d'approximativement 1,4.

15. Structure stratifiée composite selon la revendication 8, dans laquelle :
les bandes sont en outre chacune fixées de manière sensiblement adjacente les unes aux autres via un ou plusieurs fils de manière à fournir une configuration non sertie ; et
les un ou plusieurs fils sont en outre configurés pour permettre à chacune des bandes de fléchir les unes par rapport aux autres lorsque la bande est soumise à une charge.

16. Cloison intégrée stratifiée composite, ladite cloison étant formée à partir d'une pièce de matériau intégrée et étant formée soit par la structure stratifiée composite quasi-isotrope de la revendication 8, soit par une pluralité de bandes pliables bi-angulaires de la revendication 1.

17. Anneau de confinement formé soit à partir de la structure stratifiée composite quasi-isotrope de la revendication 8, soit à partir d'une pluralité de bandes pliables bi-angulaires de la revendication 1.
